(19) Europäisches Patentamt
European Patent Office
Office européen des brevets

(11) EP 3 712 188 B1

(12) **EUROPEAN PATENT SPECIFICATION**

(45) Date of publication and mention of the grant of the patent:
**11.05.2022 Bulletin 2022/19**

(21) Application number: **20161478.1**

(22) Date of filing: **06.03.2020**

(51) International Patent Classification (IPC):
***C08G 18/10*** (2006.01) ***C08G 18/42*** (2006.01)
***C08G 18/72*** (2006.01) ***C08G 18/73*** (2006.01)
***C08L 75/06*** (2006.01) ***C09D 175/06*** (2006.01)

(52) Cooperative Patent Classification (CPC):
(C-Sets available)
**C08G 18/4277; C08G 18/10; C08G 18/4833; C08G 18/722; C08G 18/73; C08G 18/755; C08G 18/807; C08G 18/8093; C08L 75/06; C09D 175/06** (Cont.)

(54) **POLYISOCYANATE COMPOSITION, BLOCKED POLYISOCYANATE COMPOSITION, COATING MATERIAL COMPOSITION, AND COATING FILM**

POLYISOCYANATZUSAMMENSETZUNG, BLOCKIERTE POLYISOCYANATZUSAMMENSETZUNG, BESCHICHTUNGSMATERIALZUSAMMENSETZUNG UND BESCHICHTUNGSFILM

COMPOSITION DE POLYISOCYANATE, COMPOSITION DE POLYISOCYANATE BLOQUÉE, COMPOSITION DE MATÉRIAU DE REVÊTEMENT ET FILM DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2019 JP 2019044216**
**30.01.2020 JP 2020014069**

(43) Date of publication of application:
**23.09.2020 Bulletin 2020/39**

(73) Proprietor: **Asahi Kasei Kabushiki Kaisha**
**Tokyo 1000006 (JP)**

(72) Inventors:
- **Tanaka, Eiko**
  **Tokyo, 100-0006 (JP)**
- **Horinouchi, Misa**
  **Tokyo, 100-0006 (JP)**
- **Katagawa, Hironori**
  **Tokyo, 100-0006 (JP)**

(74) Representative: **Strehl Schübel-Hopf & Partner**
**Maximilianstrasse 54**
**80538 München (DE)**

(56) References cited:
**WO-A1-2018/163959** **US-A1- 2010 256 324**
**US-A1- 2012 238 697**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/10, C08G 18/2865;**
**C08G 18/10, C08G 18/2895**

## Description

BACKGROUND OF THE INVENTION

Field of the Invention

The present invention relates to a polyisocyanate composition, a blocked polyisocyanate composition, a coating material composition, and a coating film.

Description of Related Art

A urethane coating material using a polyisocyanate as a curing agent forms a coating film having excellent durability and chemical resistance, and the demand thereof is increasing year by year. An isocyanate group contained in the polyisocyanate as a curing agent reacts with a hydroxy group of a polyol frequently used as a main agent at room temperature, and therefore, a coating material including the same is coated on various objects to be coated and has a wide range of applications. In recent years, from the viewpoint of energy saving and improvement in productivity, a coating material that shortens the period of time until formation of a coating film and that improves low-temperature curability has been desired.

In order to satisfy such demands, a polyisocyanate derived from an aliphatic diisocyanate, a monoalcohol, and a polyol has been developed (see, for example, Japanese Unexamined Patent Application, First Publication No. 2015-203104). The polyisocyanate described in Japanese Unexamined Patent Application, First Publication No. 2015-203104 has excellent compatibility with a main agent, curability due to a reaction with the main agent, and excellent substrate concealing properties.

US 2012/238697 A1 discloses a polyisocyanate composition comprising a polyisocyanate obtained from hexamethylene diisocyanate and a polyol PLACELL 303 having a molecular weight of 300.

US 2010/256324 A1 disclose polyisocyanate compositions comprising a polyisocyanate obtained from an aliphatic diisocyanate and a polyol.

WO 2018/163959 A1 discloses a polyaspartic coating composition comprising an aspartic acid ester compound and a polyisocyanate, wherein the polyisocyanate component contains 10.0 or less of an isocyanurate trimer.

SUMMARY OF THE INVENTION

However, the polyisocyanate described in Japanese Unexamined Patent Application, First Publication No. 2015-203104 and the like has room for improvement in adhesiveness and low-temperature curability when formed into a coating film.

The present invention has been made in view of the above circumstances, and provides a polyisocyanate composition having excellent adhesiveness and low-temperature curability when formed into a coating film; and a blocked polyisocyanate composition, a coating material composition, and a coating film, each using the polyisocyanate composition.

That is, the present invention includes the aspects listed in the claims.

With the polyisocyanate composition of the present invention, it is possible to provide a polyisocyanate composition having excellent adhesiveness and low-temperature curability when formed into a coating film.

DETAILED DESCRIPTION OF THE INVENTION

Hereinafter, a mode for carrying out the present invention (hereinafter referred to as "the present embodiment") will be described in detail. Further, the present invention is not limited to the following embodiment. The present invention can be implemented with appropriate modifications made within the scope of the claims.

Moreover, in the present specification, a "polyol" means a compound having two or more hydroxy groups (-OH).

In the present specification, a "polyisocyanate" means a reactant in which a plurality of monomer compounds having one or more isocyanate groups (-NCO) are bonded.

<<Polyisocyanate Composition>>

The polyisocyanate composition of the present embodiment includes a polyisocyanate obtained from an aliphatic diisocyanate and an alicyclic diisocyanate; and a polyol having a number-average molecular weight from 400 to 5,000, and an average number of hydroxy groups from 3 to 8.

Furthermore, the polyisocyanate composition of the present embodiment satisfies the following conditions (1)

to (3).

(1) The content of a structural unit derived from the polyol is from 22% by mass to 80% by mass with respect to a total mass of the polyisocyanate composition;
(2) The average number of isocyanate functional groups is from 3.5 to 20; and
(3) The weight-average molecular weight (Mw)/the number-average molecular weight (Mn) is from 3.5 to 15.

With regard to the condition (1), the content of the structural unit derived from the polyol (hereinafter sometimes abbreviated as "PO content") is from 22% by mass to 80% by mass, preferably from 22% by mass to 75% by mass, more preferably from 30% by mass to 75% by mass, and still more preferably from 35% by mass to 75% by mass, with respect to a total mass of the polyisocyanate composition.
By setting the PO content within the above range, it is possible to further improve the adhesiveness to an object to be coated and the low-temperature curability as a coating film.
The PO content can be calculated using a method described later in Examples.
With regard to the condition (2), the average number of isocyanate functional groups is from 3.5 to 20, preferably from 4.0 to 15, more preferably from 4.5 to 10, and still more preferably from 5.0 to 9.0.
By setting the average number of isocyanate functional groups within the above range, the reactivity with the hydroxy group of the main agent can be improved.
The average number of isocyanate functional groups can be calculated using the method described later in Examples.
With regard to the condition (3), Mw/Mn is from 3.5 to 15, preferably from 3.5 to 12, more preferably from 3.5 to 11, and still more preferably from 4.0 to 11.
By setting Mw/Mn within the above range, the adhesiveness to an object to be coated and the low-temperature curability when formed into a coating film can be further improved.
Mw/Mn of the polyisocyanate composition can be calculated using Mw and Mn obtained after measuring Mw and Mn by gel permeation chromatography (GPC) measurement. Specifically, Mw/Mn can be calculated using a method described later in Examples.
By allowing the polyisocyanate composition of the present embodiment to have the structure, the polyisocyanate composition has a structure with high flexibility and easily forms a crosslinked structure when mixed with a main agent, and therefore, it has excellent low-temperature curability when formed into a coating film. In addition, by allowing the polyisocyanate composition of the present embodiment to have the above structure, the polyisocyanate composition has a decrease in Tg and improved pressure-sensitive adhesiveness, and thus has good adhesiveness to an object to be coated when formed into a coating film.
Next, the respective components included in the polyisocyanate composition of the present embodiment will be described in detail below.

<Polyisocyanate>

The polyisocyanate included in the polyisocyanate composition of the present embodiment is a reaction product of a diisocyanate and a polyol.
The polyisocyanate included in the polyisocyanate composition of the present embodiment can include one or more functional groups selected from the group consisting of an allophanate group, a uretdione group, an iminooxadiazinedione group, an isocyanurate group, a urethane group, and a biuret group. Among those, the isocyanurate group is preferably contained due to its excellent weather resistance.
Generally, the "allophanate group" is a functional group obtained by reacting a hydroxy group of an alcohol with an isocyanate group, and is a group represented by Formula (VII).
Generally, the "uretdione group" is a functional group obtained by reacting two isocyanate groups, and is a group represented by Formula (VIII).
Generally, the "iminooxadiazinedione group" is a functional group obtained by reacting three isocyanate groups, and is a group represented by Formula (IX).
Generally, the "isocyanurate group" is a functional group obtained by reacting three isocyanate groups, and is a group represented by the following Formula (X).
Generally, the "urethane group" is a functional group obtained by reacting one isocyanate group with one hydroxy group, and is a group represented by Formula (XI).
Generally, the "biuret group" is a functional group obtained by reacting three isocyanate groups with a biuretizing agent, and is a group represented by Formula (XII).

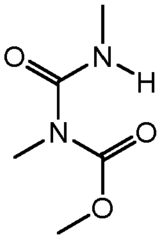 (VII) 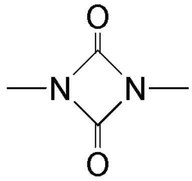 (VIII)

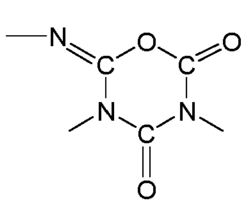 (IX) 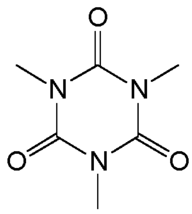 (X)

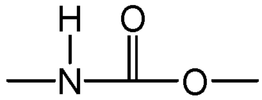 (XI) 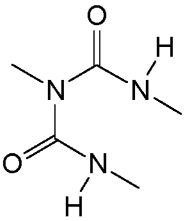 (XII)

In the polyisocyanate composition of the present embodiment, the molar ratio of the urethane group to the allophanate group (urethane group/allophanate group) is preferably from 0/10 to 2/8 or less, and more preferably from 0/10 to 1/9. By setting the urethane group/allophanate group within the above range, it is possible to further improve the low-temperature curability of the coating film.

The urethane group/allophanate group can be calculated, for example, using the following method.

$^{13}$C-NMR is measured under the following conditions using Biospin Avance 600 (trade name) manufactured by Bruker Biospin Corp.

(Measurement Conditions)

$^{13}$C-NMR device: AVANCE 600 (manufactured by Biospin Corp.)
Cryoprobe (manufactured by Biospin Corp.)
Cryo Probe
CPDUL
600S3-C/H-D-05Z
Resonant frequency: 150 MHz
Concentration: 60 wt/vol%
Shift standard: $CDCl_3$ (77 ppm)
Cumulative number: 10,000 times
Pulse program: zgpg 30 (proton complete decoupling method, waiting time of 2 sec.)

Next, from the obtained measurement results, an integral value of the following signal is divided by the number of carbon atoms thus measured, and a molar amount of each of the functional groups is determined from the value. Next, the urethane group/allophanate group can be calculated by dividing the obtained molar amount of the urethane group by a molar amount of the allophanate group.

Allophanate group: Integral value around 154 ppm ÷ 1

Urethane group: Integral value around 156.5 ppm ÷ 1 - Integral value of allophanate group

The polyisocyanate composition of the present invention includes a polyisocyanate (hereinafter sometimes referred to as an "isocyanurate trimer") which is formed of three molecules of diisocyanate and has an isocyanurate group. The content of the isocyanurate trimer is 12% or more, with respect to the solid content included in the polyisocyanate composition.
The content of the isocyanurate trimer can be calculated, for example, using the following method.
GPC measurement is performed on the polyisocyanate composition. Next, a ratio of the area of the isocyanurate trimer to the area of the entire polyisocyanate composition is determined from the obtained measurement results, and the ratio can be defined as the content of the isocyanurate trimer in the polyisocyanate composition.

[Diisocyanate]

As the aliphatic diisocyanate used in the polyisocyanate composition of the present embodiment, an aliphatic diisocyanate having 4 to 30 carbon atoms is preferable, specific examples thereof include 1,4-tetramethylene diisocyanate, 1,6-hexamethylene diisocyanate (hereinafter sometimes referred to as "HDI"), 2,2,4-trimethyl-1,6-diisocyanatohexane, 2,4,4-trimethyl-1,6-hexamethylene diisoisocyanate, 2-methylpentane-1,5-diisocyanate (MPDI), and lysine diisocyanate (hereinafter sometimes referred to as "LDI"). These aliphatic diisocyanates may be used alone or in combination of two or more kinds thereof. Among those, HDI is preferable from the viewpoint of industrial availability.
As the alicyclic diisocyanate used in the polyisocyanate composition of the present embodiment, an alicyclic diisocyanate having 8 to 30 carbon atoms is preferable, and specific examples thereof include isophorone diisocyanate (hereinafter sometimes referred to as "IPDI"), 1,3-bis(diisocyanatomethyl) cyclohexane, 4,4'-dicyclohexylmethane diisocyanate, diisocyanate norbornane, and di(isocyanatomethyl) norbornane. These alicyclic diisocyanates may be used alone or in combination of two or more kinds thereof. Among those, IPDI is preferable from the viewpoint of weather resistance and industrial availability.
In the polyisocyanate composition of the present invention, the aliphatic diisocyanate and the alicyclic diisocyanate are used in combination thereof, and HDI and IPDI are particularly preferably used. The toughness and the elasticity when formed into a coating film can be further improved by using the aliphatic diisocyanate and the alicyclic diisocyanate.
In the polyisocyanate composition of the present embodiment, the mass ratio of a structural unit derived from the aliphatic diisocyanate to a structural unit derived from the alicyclic diisocyanate is from 50/50 to 95/5, more preferably from 60/40 to 90/10, and still more preferably 70/30 to 80/20.
By setting the mass ratio of the structural unit derived from the aliphatic diisocyanate to the structural unit derived from the alicyclic diisocyanate to the lower limit value or less, it is possible to more effectively suppress a reduction in the flexibility when formed into a coating film. On the other hand, by setting the content to the upper limit value or more, it is possible to further improve a hardness when formed into a coating film.
The mass ratio of the structural unit derived from the aliphatic diisocyanate to the structural unit derived from the alicyclic diisocyanate can be calculated using the following method. First, the mass of the unreacted aliphatic diisocyanate and the mass of the unreacted alicyclic diisocyanate are calculated from the mass of the unreacted diisocyanate after the reaction, the concentration of the aliphatic diisocyanate, and the concentration of the alicyclic diisocyanate in the unreacted diisocyanate obtained by gas chromatography measurement. Then, the mass of the unreacted aliphatic diisocyanate and the mass of the unreacted alicyclic diisocyanate, each calculated above, are subtracted from the mass of the charged aliphatic diisocyanate and the mass of the alicyclic diisocyanate, and then a difference thus obtained is defined as the mass of the structural unit derived from the aliphatic diisocyanate and the mass of the structural unit derived from the alicyclic diisocyanate, respectively. Subsequently, by dividing the mass of the structural unit derived from the aliphatic diisocyanate by the mass of the structural unit derived from the alicyclic diisocyanate, the mass ratio of the structural unit derived from the aliphatic diisocyanate to the structural unit derived from the alicyclic diisocyanate can be obtained.
Specifically, it can be calculated using a method described later in Examples.

[Polyol]

The polyol is a polyol having a number-average molecular weight from 400 to 5,000, and has an average number of hydroxy groups from 3 to 8.
The number-average molecular weight of the polyol is from 400 to 5,000, preferably more than 500 and 5,000 or less, more preferably from 550 to 4,500, still more preferably from 850 to 4,000, even more preferably from 1,260 to 4,000, even still more preferably from 1,500 to 4,000, particularly preferably 1,700 to 4,000, and most preferably from 2,000 to 4,000.
By setting the number-average molecular weight of the polyol within the above range, the polyisocyanate

composition of the present embodiment has a structure having high flexibility, and easily forms a crosslinked structure when mixed with the main agent, and therefore, it has excellent low-temperature curability when formed into a coating film. In addition, by setting the number-average molecular weight of the polyol within the above range, the polyisocyanate composition of the present embodiment has a decrease in Tg and improved pressure-sensitive adhesiveness, and therefore, it has good adhesiveness to an object to be coated when formed into a coating film. Furthermore, by allowing the number-average molecular weight of the polyol within the above range, in a coating film using the polyisocyanate composition of the present embodiment, flexibility is maintained in spite of a high degree of crosslinking, and therefore, it is presumed that water is hardly penetrated into an object to be adhered at an interface, and thus, water-resistance adhesiveness is improved.

The average number of hydroxy groups of the polyol used in the polyisocyanate composition of the present embodiment is from 3 to 8, preferably from 3 to 6, more preferably from 3 to 5, and still more preferably 3 or 4.

Specific examples of the polyol include a polyester polyol and a polyether polyol.

(Polyester Polyol)

The polyester polyol can be obtained, for example, by subjecting a dibasic acid alone or a mixture of two or more kinds thereof and a polyhydric alcohol alone or a mixture of two or more kinds thereof to a condensation reaction.

Examples of the dibasic acid include carboxylic acids such as succinic acid, adipic acid, dimer acid, maleic anhydride, phthalic anhydride, isophthalic acid, terephthalic acid, and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, and ethoxylated trimethylolpropane.

As a specific method for producing a polyester polyol, for example, a condensation reaction can be carried out by mixing the components and heating the mixture at approximately from 160°C to 220°C. Alternatively, for example, polycaprolactones obtained by ring-opening polymerization of a lactone such as ε-caprolactone using a polyhydric alcohol, and the like can also be used as the polyester polyol.

A polyester polyol obtained by the above-mentioned production method is preferably modified with an aliphatic diisocyanate, an alicyclic diisocyanate, a compound obtained therefrom, or the like from the viewpoints of weather resistance, yellowing resistance, and the like of the obtained coating film.

(Polyether Polyol)

The polyether polyol can be obtained, for example, using any of the following methods (1) to (3), or the like:

(1) a method in which polyether polyols are obtained by random or block addition of alkylene oxides alone or as a mixture to polyhydric hydroxy compounds alone or as a mixture using a catalyst.

Examples of the catalyst include a hydroxide of lithium, sodium, potassium, or the like, a strong basic catalyst, and a composite metal cyanide compound complex. Examples of the strong basic catalyst include an alcoholate and an alkylamine, and examples of the composite metal cyanide compound complex include a metal porphyrin and a zinc hexacyanocobaltate complex.

Examples of the alkylene oxide include ethylene oxide, propylene oxide, butylene oxide, cyclohexene oxide, and styrene oxide.

(2) A method in which polyether polyols are obtained by reacting alkylene oxide with a polyamine compound.

Examples of the polyamine compound include ethylene diamines.

Examples of the alkylene oxide include the same as those exemplified in (1).

(3) A method in which so-called polymer polyols are obtained by polymerization of acrylamide and the like with the polyether polyols obtained in (1) or (2) as a medium.

Examples of the polyhydric hydroxy compound include those shown in (i) to (vi) below.

(i) diglycerin, ditrimethylolpropane, pentaerythritol, dipentaerythritol, and the like;
(ii) sugar alcohol-based compounds such as erythritol, D-threitol, L-arabinitol, ribitol, xylitol, sorbitol, mannitol, galactitol, and ramnitol;
(iii) monosaccharides such as arabinose, ribose, xylose, glucose, mannose, galactose, fructose, sorbose, rhamnose, fucose, and ribodesose;
(iv) disaccharides such as trehalose, sucrose, maltose, cellobiose, gentiobiose, lactose, and melibiose;
(v) trisaccharides such as raffinose, gentianose, and melezitose; and
(vi) tetrasaccharides such as stachyose.

Among those, a polyester polyol is preferable as the polyol, and a polycaprolactone polyol obtained by ring-opening polymerization of ε-caprolactone using a low-molecular-weight polyol is more preferable.

<Physical Properties of Polyisocyanate Composition>

(Content of Isocyanate Group)

The content of the isocyanate group of the polyisocyanate composition is preferably from 5% by mass to 20% by mass, more preferably from 6% by mass to 19% by mass, and still more preferably from 8% by mass to 17% by mass.
The content of the isocyanate group can be measured using a method described later in Examples.

(Number-Average Molecular Weight)

The number-average molecular weight of the polyisocyanate composition is preferably from 1,000 to 5,000, more preferably from 1,200 to 4,800, and still more preferably from 1,500 to 4,600. By setting the number-average molecular weight to the lower limit value or more, it is possible to more effectively suppress a decrease in flexibility of the coating film, whereas by setting the number-average molecular weight to the upper limit value or less, it is possible to more effectively suppress a decrease in smoothness of the coating film.
The number-average molecular weight of the polyisocyanate composition can be measured using a method described later in Examples.

(Weight-Average Molecular Weight)

The weight-average molecular weight of the polyisocyanate composition is preferably from 4,000 to 50,000, more preferably from 4,500 or to 49,000, and still more preferably from 5,000 to 48,500.
The weight-average molecular weight of the polyisocyanate composition can be measured using a method described later in Examples.

<Hydrophilic Compound>

The polyisocyanate included in the polyisocyanate composition of the present embodiment may have a structural unit partially or wholly derived from a hydrophilic compound.
That is, a part or all of the polyisocyanates included in the polyisocyanate composition of the present embodiment may be a hydrophilic polyisocyanate.
In order to undergo a reaction with one isocyanate group, it is preferable that the hydrophilic compound have one or more active hydrogen groups to react with the isocyanate group contained in the polyisocyanate per molecule of the hydrophilic compound. Specific examples of the active hydrogen group include a hydroxy group, a mercapto group, a carboxylic acid group, an amino group, and a thiol group.
Examples of the hydrophilic group include a nonionic hydrophilic group, a cationic hydrophilic group, and an anionic hydrophilic group. These hydrophilic groups may be used alone or in combination two or more kinds thereof. Among those, as the hydrophilic group, the nonionic hydrophilic group is preferable from the viewpoint that it is easily available and is less susceptible to electrical interaction with the compound, and the anionic hydrophilic groups are preferable from the viewpoint of suppressing a decrease in hardness of the obtained coating film.

(Hydrophilic Compound Having Nonionic Hydrophilic Group)

Specific examples of the hydrophilic compound having a nonionic hydrophilic group include a monoalcohol and a compound in which ethylene oxide is added to a hydroxy group of an alcohol. Examples of the monoalcohol include methanol, ethanol, and butanol. Examples of the compound obtained by adding ethylene oxide to a hydroxy group of an alcohol include ethylene glycol, diethylene glycol, and polyethylene glycol. These hydrophilic compounds having a nonionic hydrophilic group also have an active hydrogen group which reacts with an isocyanate group.
The number of ethylene oxide added to the compound to which ethylene oxide is added is preferably from 4 to 30, and more preferably from 4 to 20. By setting the number of additions of ethylene oxide to the lower limit value or more, water dispersibility tends to be more effectively imparted to the polyisocyanate composition, while by setting the number of additions of ethylene oxide to the upper limit value or less, precipitates of the polyisocyanate composition tends to hardly occur during storage at a low temperature.
Above all, as the hydrophilic compound having a nonionic hydrophilic group, the monoalcohol is preferable since the water dispersibility of the polyisocyanate composition can be improved with a small amount of use.

From the viewpoint of water dispersion stability of the polyisocyanate composition, the lower limit value of the amount of the nonionic hydrophilic group to be added to the polyisocyanate (hereinafter sometimes referred to as a "content of the nonionic hydrophilic group") is preferably 1% by mass, more preferably 3% by mass, more preferably 4% by mass, and particularly preferably 4.5% by mass, with respect to the mass of the solid content of the polyisocyanate composition.

Furthermore, from the viewpoint of the water resistance of the obtained coating film, the upper limit value of the content of the nonionic hydrophilic group is preferably 30% by mass, more preferably 20% by mass, still more preferably 10% by mass, and particularly preferably 8% by mass, with respect to the mass of the solid content of the polyisocyanate composition.

That is, the upper limit value of the content of the nonionic hydrophilic group is preferably from 1% by mass to 30% by mass, more preferably from 3% by mass to 20% by mass, still more preferably from 4% by mass to 10% by mass, and particularly preferably from 4.5% by mass to 8% by mass, with respect to the mass of the non-volatile contents of the polyisocyanate composition.

By setting the content of the nonionic hydrophilic group within the above range, the polyisocyanate composition is more dispersed in water, and there is a tendency that the water resistance of a coating film thus obtained is improved.

(Hydrophilic Compound Having Cationic Hydrophilic Group)

Specific examples of the hydrophilic compound having a cationic hydrophilic group include compounds having both a cationic hydrophilic group and an active hydrogen group. Further, a compound having an active hydrogen group such as a glycidyl group and a compound having a cationic hydrophilic group such as sulfide and phosphine may be both used as the hydrophilic compound. In this case, a compound having an isocyanate group and a compound having an active hydrogen group are reacted with each other in advance, a functional group such as a glycidyl group is added thereto, and then a compound such as sulfide and phosphine is reacted therewith. From the viewpoint of ease of production, the compound having both a cationic hydrophilic group and an active hydrogen group is preferable.

Specific examples of the compound having both a cationic hydrophilic group and an active hydrogen group include dimethylethanolamine, diethylethanolamine, diethanolamine, and methyldiethanolamine. Further, the tertiary amino group added using such the compound can be quaternized with, for example, dimethyl sulfate or diethyl sulfate.

The reaction between the hydrophilic compound having a cationic hydrophilic group and the polyisocyanate can be performed in the presence of a solvent. In this case, it is preferable that the solvent not include an active hydrogen group, and specific examples of the solvent include ethyl acetate, propylene glycol monomethyl ether acetate, and dipropylene glycol dimethyl ether.

The cationic hydrophilic group added to the polyisocyanate is preferably neutralized with a compound having an anionic group. Specific examples of the anionic group include a carboxy group, a sulfonic acid group, a phosphoric acid group, a halogen group, and a sulfuric acid group.

Specific examples of the compound having a carboxyl group include formic acid, acetic acid, propionic acid, butyric acid, and lactic acid.

Specific examples of the compound having a sulfone group include ethanesulfonic acid.

Specific examples of the compound having a phosphoric acid group include phosphoric acid and an acidic phosphoric acid ester.

Specific examples of the compound having a halogen group include hydrochloric acid.

Specific examples of the compound having a sulfuric acid group include sulfuric acid.

Among those, as the compound having an anionic group, the compound having a carboxyl group is preferable, and acetic acid, propionic acid, or butyric acid is more preferable.

(Hydrophilic Compound Having Anionic Hydrophilic Group)

Specific examples of the anionic hydrophilic group include a carboxy group, a sulfonic acid group, a phosphoric acid group, a halogen group, and a sulfuric acid group.

Specific examples of the hydrophilic compound having an anionic hydrophilic group include a compound having both an anionic group and an active hydrogen group, and more specifically, for example, a compound having a carboxy group of a monohydroxycarboxylic acid or a polyhydroxycarboxylic acid as an anionic group.

Examples of the monohydroxycarboxylic acid include 1-hydroxyacetic acid, 3-hydroxypropanoic acid, 12-hydroxy-9-octadecanoic acid, hydroxypivalic acid (hydroxypivalic acid), and lactic acid.

Examples of the compound having a carboxy group of a polyhydroxycarboxylic acid as an anionic group include dimethylolacetic acid, 2,2-dimethylolbutyric acid, 2,2-dimethylolpentanoic acid, dihydroxysuccinic acid, and dimethylolpropionic acid.

In addition, a compound having both a sulfonic acid group and an active hydrogen group is also included, and

specific examples thereof include isethionic acid.

Among those, the hydroxypivalic acid or the dimethylolpropionic acid is preferable as the compound having both an anionic group and an active hydrogen group.

The anionic hydrophilic group added to the polyisocyanate is preferably neutralized with an amine-based compound which is a basic substance.

Specific examples of the amine-based compound include ammonia and a water-soluble amino compound.

Specific examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. In addition, tertiary amines such as triethylamine and dimethylethanolamine are also included, and these can also be used. These amine-based compounds can be used alone or in combination of two or more kinds thereof.

<Blocking Agent>

A part or all of the isocyanate groups of the polyisocyanate composition of the present embodiment may be blocked by a blocking agent. That is, the polyisocyanate composition of the present embodiment can be a blocked polyisocyanate composition including a blocked polyisocyanate.

Examples of the blocking agent include (1) an alcohol-based compound, (2) an alkylphenol-based compound, (3) a phenol-based compound, (4) an active methylene-based compound, (5) a mercaptan-based compound, (6) an acid amide-based compound, (7) an acid imide-based compound, (8) an imidazole-based compound, (9) a urea-based compound, (10) an oxime-based compound, (11) an amine-based compound, (12) an imide-based compound, (13) a bisulfite, (14) a pyrazole-based compound, and (15) a triazole-based compound. More specifically, examples of the blocking agent include those shown below.

(1) Alcohol-based compound: alcohols such as methanol, ethanol, 2-propanol, n-butanol, sec-butanol, 2-ethyl-1-hexanol, 2-methoxyethanol, 2-ethoxyethanol, and 2-butoxyethanol.
(2) Alkylphenol-based compound: mono- and dialkylphenols having an alkyl group having 4 or more carbon atoms as a substituent. Specific examples of the alkylphenol-based compound include monoalkylphenols such as n-propylphenol, iso-propylphenol, n-butylphenol, sec-butylphenol, tert-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-tert-butylphenol, di-sec-butylphenol, di-n-octylphenol, di-2-ethylhexylphenol, and di-n-nonylphenol.
(3) Phenol-based compound: phenol, cresol, ethyl phenol, styrenated phenol, hydroxybenzoic acid ester, and the like.
(4) Active methylene-based compound.
(5) Mercaptan-based compound: butyl mercaptan, dodecyl mercaptan, and the like.
(6) Acid amide-based compound: acetanilide, acetic acid amide, ε-caprolactam, δ-valerolactam, γ-butyrolactam, and the like.
(7) Acid imide-based compound: succinimide, maleic imide, and the like.
(8) Imidazole-based compound: imidazole, 2-methyl imidazole, 2-ethyl imidazole, and the like.
(9) Urea-based compound: urea, thiourea, ethylene urea, and the like.
(10) Oxime-based compound: formaldoxime, acetoaldoxime, acetoxime, methyl ethyl ketoxime, cyclohexanone oxime, and the like.
(11) Amine-based compound: diphenylamine, aniline, carbazole, di-n-propylamine, diisopropylamine, isopropylethylamine, and the like.
(12) Imine-based compound: ethyleneimine, polyethyleneimine, and the like.
(13) Bisulfite compound: sodium bisulfite and the like.
(14) Pyrazole-based compound: pyrazole, 3-methylpyrazole, 3,5-dimethylpyrazole, and the like.
(15) Triazole-based compound: 3,5-dimethyl-1,2,4-triazole and the like.

Among those, the blocking agent is preferably at least one compound selected from the group consisting of the oxime-based compound, the pyrazole-based compound, the imidazole-based compound, the triazole-based compound, and the active methylene-based compound, more preferably at least one compound selected from the group consisting of the imidazole-based compound, the triazole-based compound, and the active methylene-based compound, and still more preferably the active methylene-based compound. These blocking agents may be used alone or in combination of two or more kinds thereof.

Examples of the active methylene-based compound include dimethyl malonate, diethyl malonate, methyl acetoacetate, ethyl acetoacetate, acetylacetone, and a compound represented by General Formula (I) (hereinafter sometimes referred to as "compound (I)"). Among those, compound (I) is preferable.

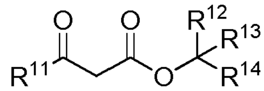

(I)

(In General Formula (I), $R^{11}$ is a hydroxy group; an alkyl group which may include one or more substituents selected from the group consisting of a hydroxy group and an amino group; an amino group which may include one or more substituents selected from the group consisting of a hydroxy group and an alkyl group; an aryl group which may include one or more substituents selected from the group consisting of a hydroxy group and an amino group; or an alkoxy group which may include one or more substituents selected from the group consisting of a hydroxy group and an amino group; and in the amino group, two of the substituents may be linked to each other to form a ring.

$R^{12}$, $R^{13}$, and $R^{14}$ are each independently a hydrogen atom; an alkyl group which may include one or more substituents selected from the group consisting of a hydroxy group and an amino group; or an aryl group which may include one or more substituents selected from the group consisting of a hydroxy group and an amino group. In the amino group, two of the substituents may be linked to each other to form a ring. However, there is no case where two or more of $R^{12}$, $R^{13}$, and $R^{14}$ are hydrogen atoms.)

[Compound (I)] ($R^{11}$)

(1) $R^{11}$: Alkyl group

In the case where $R^{11}$ is an alkyl group having no substituent, the alkyl group preferably has 1 to 30 carbon atoms, more preferably has 1 to 8 carbon atoms, still more preferably has 1 to 6 carbon atoms and particularly preferably has 1 to 4 carbon atoms. Specific examples of the alkyl group having no substituent include a methyl group, an ethyl group, a propyl group, an isopropyl group, an n-butyl group, a tert-butyl group, a sec-butyl group, an isobutyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group, and a decyl group.

Furthermore, in the case where $R^{11}$ is an alkyl group having a substituent, the substituent is a hydroxy group or an amino group.

Examples of the alkyl group including a hydroxy group as a substituent include a hydroxymethyl group, a hydroxyethyl group, and a hydroxypropyl group.

Examples of the alkyl group including an amino group as a substituent include an aminomethyl group, an aminoethyl group, an aminopropyl group, and an aminobutyl group.

Examples of the alkyl group including a hydroxy group and an amino group as a substituent include a hydroxyaminomethyl group, a hydroxyaminoethyl group, and a hydroxyaminopropyl group.

(2) $R^{11}$: Amino group

In the case where $R^{11}$ is an amino group having a substituent, the substituent is a hydroxy group or an alkyl group.

Examples of the amino group having a hydroxy group as a substituent include a hydroxyamino group (-NH-OH).

Examples of the amino group having an alkyl group as a substituent include a methylamino group, an ethylamino group, an n-butylamino group, a dimethylamino group, a diethylamino group, a dipropylamino group, a diisopropylamino group, a di-n-butylamino group, a di-tert-butylamino group, a di-sec-butylamino group, a diisobutylamino group, and a 2,6-dimethylpiperidyl group.

Examples of the amino group having a hydroxy group and an alkyl group as a substituent include a hydroxymethyleneamino group, a hydroxyethyleneamino group, a hydroxypropyleneamino group, and a hydroxybutyleneamino group.

Examples of the amino group in which two substituents are linked to each other to form a ring include an ethyleneimino group, an azacyclobutyl group, a pyrrolidyl group, a piperidyl group, a 2,6-dimethylpiperidyl group, and a hexamethyleneimino group.

(3) $R^{11}$: Aryl group

In the case where $R^{11}$ is an aryl group having no substituent, the aryl group preferably has 5 to 30 carbon atoms, more preferably has 6 to 20 carbon atoms, and still more preferably has 6 to 14 carbon atoms. Specific examples of the aryl group include a monocyclic aromatic hydrocarbon group, a bicyclic aromatic hydrocarbon group, a tricyclic aromatic hydrocarbon group, a tetracyclic aromatic hydrocarbon group, a pentacyclic aromatic hydrocarbon group, a hexacyclic aromatic hydrocarbon group, and a heptacyclic aromatic hydrocarbon group.

Examples of the monocyclic aromatic hydrocarbon group include a phenyl group, a benzyl group, a tolyl group, and an o-xylyl group.

Examples of the bicyclic aromatic hydrocarbon group include an indanyl group, an indenyl group, a pentalenyl group, an azulenyl group, a naphthyl group, and a tetrahydronaphthyl group.

Examples of the tricyclic aromatic hydrocarbon group include an anthracenyl group, a fluorenyl group, a phenalenyl group, and a phenanthrenyl group.

Examples of the tetracyclic aromatic hydrocarbon group include a pyrenyl group, a naphthacenyl group, and a chrysenyl group.

Examples of the pentacyclic aromatic hydrocarbon group include a perylenyl group, a picenyl group, and a pentacenyl group.

Examples of the hexacyclic aromatic hydrocarbon group include a naphthopyrenyl group.

Examples of the heptacyclic aromatic hydrocarbon group include a coronenyl group.

In the case where $R^{11}$ is an aryl group having a substituent, the substituent is a hydroxy group or an amino group.

Examples of the aryl group including a hydroxy group as a substituent include a phenol group.

Examples of the aryl group including an amino group as a substituent include an aniline group.

Examples of the aryl group including a hydroxy group and an amino group as a substituent include an aminophenol group (hydroxyaniline group).

(4) $R^{11}$: Alkoxy group

In the case where $R^{11}$ is an alkoxy group having no substituent, the alkoxy group preferably has 1 to 30 carbon atoms, more preferably has 1 to 8 carbon atoms, still more preferably has 1 to 6 carbon atoms, and particularly preferably has 1 to 4 carbon atoms. Specific examples of the alkoxy group include a methoxy group, an ethoxy group, a propoxy group, an isopropoxy group, an n-butoxy group, a tert-butoxy group, a sec-butoxy group, an isobutoxy group, an n-pentoxy group, an isopentoxy group, a neopentoxy group, a tert-pentoxy group, a 1-methylbutoxy group, an n-hexoxy group, a 2-methylpentoxy group, a 3-methylpentoxy group, a 2,2-dimethylbutoxy group, a 2,3-dimethylbutoxy group, an n-heptoxy group, a 2-methylhexoxy group, a 3-methylhexoxy group, a 2,2-dimethylpentoxy group, a 2,3-dimethylpentoxy group, a 2,4-dimethylpentoxy group, a 3,3-dimethylpentoxy group, a 3-ethylpentoxy group, a 2,2,3-trimethylbutoxy group, an n-octoxy group, an isooctoxy group, a 2-ethylhexoxy group, a noninoxy group, and a decyloxy group.

In the case where $R^{11}$ is a substituted alkoxy group, the substituent is a hydroxy group or an amino group.

Examples of the alkoxy group including a hydroxy group as a substituent include a hydroxymethyleneoxy group, a hydroxyethyleneoxy group, a hydroxypropyleneoxy group, and a hydroxybutyleneoxy group.

Examples of the alkoxy group including an amino group as a substituent include an aminomethyleneoxy group, an aminoethyleneoxy group, an aminopropyleneoxy group, and an aminobutyleneoxy group.

Examples of the alkoxy group including a hydroxy group and an amino group as a substituent include a hydroxyaminomethylidineoxy group, a hydroxyaminoethylidineoxy group, and a hydroxyaminopropylidineoxy group.

($R^{12}$, $R^{13}$, and $R^{14}$)

In General Formula (I), $R^{12}$, $R^{13}$, and $R^{14}$ each independently represent a hydrogen atom; a hydroxy group; an alkyl group which may include one or more substituents selected from the group consisting of a hydroxy group and an amino group; an amino group which may include one or more substituents selected from the group consisting of a hydroxy group and an alkyl group; an aryl group which may include one or more substituents selected from the group consisting of a hydroxy group and an amino group; or an alkoxy group which may include one or more substituents selected from the group consisting of a hydroxy group and an amino group. In the amino group, two of the substituents may be linked to each other to form a ring. However, there is no case where two or more of $R^{12}$, $R^{13}$, and $R^{14}$ are hydrogen atoms.

Examples of the alkyl group, the amino group, the aryl group, and the alkoxy group include the same as those exemplified in the above "$R^{11}$".

Among those, it is preferable that $R^{12}$, $R^{13}$, and $R^{14}$ each independently represents the hydrogen atom; the alkyl group which may include one or more substituents selected from the group consisting of a hydroxy group and an

amino group; or the aryl group which may include one or more substituents selected from the group consisting of a hydroxy group and an amino group, and two or more of $R^{12}$, $R^{13}$, and $R^{14}$ are not hydrogen atoms.

In compound (I), from the viewpoints of industrial availability and excellent low-temperature curability, it is preferable that $R^{11}$ be an alkoxy group, $R^{12}$ be a hydrogen atom or an alkyl group, and $R^{13}$ and $R^{14}$ be alkyl groups.

Furthermore, by allowing compound (I) to have a tert-butyl ester structure or a tert-pentyl ester structure, compound (I) has excellent low-temperature curability and water resistance when formed into a coating film, and by allowing compound (I) to have a sec-butyl ester structure or an iso-propyl ester structure, there is a tendency that compound (I) has excellent storage stability (water dispersion stability and viscosity stability) when formed into a coating material composition, and low-temperature curability and hardness retention when formed into a coating film.

Specific preferable examples of compound (I) include isopropyl acetoacetate, di-sec-butyl malonate, di-tert-butyl malonate, di-tert-pentyl malonate, diisopropyl malonate, tert-butylethyl malonate, and isopropylethyl malonate.

Among those, from the viewpoint of further low-temperature curability of the obtained coating film, di-sec-butyl malonate, di-tert-butyl malonate, di-tert-pentyl malonate, diisopropyl malonate, or tert-butyl ethyl malonate is preferable, and from the viewpoint of adhesiveness to an object to be coated when formed into a coating film, the di-sec-butyl malonate or the diisopropyl malonate is more preferable.

[Bonded Structure]

The blocked polyisocyanate preferably has, for example, a methanetetracarbonyl structure represented by General Formula (II), an enol form of a methanetricarbonyl structure represented by General Formula (III), an enol form of a methanetricarbonyl structure represented by General Formula (IV), a keto form of a methanetricarbonyl structure represented by General Formula (V), or the like as a bonded structure formed by reacting the isocyanate group of the polyisocyanate with compound (I).

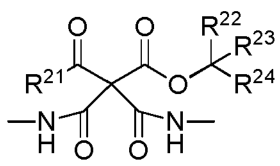
(II)

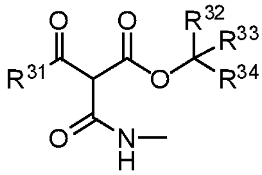
(III)

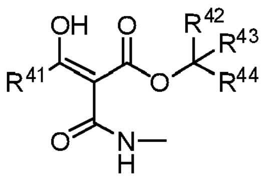
(IV)

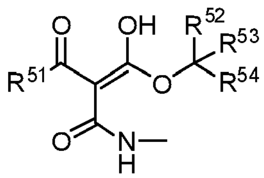
(V)

(In General Formula (II), $R^{21}$, $R^{22}$, $R^{23}$, and $R^{24}$ are the same as $R^{11}$, $R^{12}$, $R^{13}$, and $R^{14}$, respectively.

In General Formula (III), $R^{31}$, $R^{32}$, $R^{33}$, and $R^{34}$ are the same as $R^{11}$, $R^{12}$, $R^{13}$, and $R^{14}$, respectively.

In General Formula (IV), $R^{41}$, $R^{42}$, $R^{43}$, and $R^{44}$ are the same as $R^{11}$, $R^{12}$, $R^{13}$, and $R^{14}$, respectively.

In General Formula (V), $R^{51}$, $R^{52}$, $R^{53}$, and $R^{54}$ are the same as $R^{11}$, $R^{12}$, $R^{13}$, and $R^{14}$, respectively.)

The content of the methanetetracarbonyl structure represented by General Formula (II) with respect to the total molar amount of the bonded structure in which compound (I) is bonded to the polyisocyanate is preferably from 0.5% by mole to 10% by mole, more preferably from 0.5% by mole to 8% by mole, still more preferably from 0.5% by mole to 6% by mole, particularly preferably from 1% by mole to 5% by mole, highly preferably from 2% by mole to 4% by mole, and most preferably from 2.7% by mole to 3.6% by mole.

By setting the content of the methanetetracarbonyl structure to the lower limit value or more, it is possible to further improve the low-temperature curability of the coating film. On the other hand, by setting the content of the methanetetracarbonyl structure to the upper limit value or less, it is possible to further improve the storage stability (viscosity stability) of the coating material composition and the hardness retention of the coating film.

The content of the methanetetracarbonyl structure is calculated using a method shown below.

Specifically, a ratio of the molar amount of the methanetetracarbonyl structure to the total molar amount of the methanetetracarbonyl structure, the keto form having the methanetricarbonyl structure, and the enol form having the methanetricarbonyl structure (methanetetracarbonyl structure/(methanetetracarbonyl structure + keto form of methanetricarbonyl structure + enol-form of methanetricarbonyl structure)) was determined by $^1$H-NMR measurement using

"Avance600" (trade name) manufactured by Bruker Biospin. The measurement conditions are as follows.

(Measurement Conditions)

Apparatus: "Avance 600" (trade name) manufactured by Bruker Biospin Corp.
Solvent: Deuterated chloroform
Cumulative number: 256 times
Sample concentration: 5.0% by mass
Chemical shift reference: 0 ppm of tetramethylsilane.

Furthermore, an integral value of the following signal is divided by the number of carbons thus measured, and a molar amount of each of the structures is determined from the value.
NH proton of the methanetetracarbonyl structure represented by General Formula (II): in the vicinity of 8.0 ppm, integral value ÷ 2
NH protons of an enol form of the methanetricarbonyl structure represented by General Formula (III) and an enol form of the methanetricarbonyl structure represented by General Formula (IV): in the vicinity of 9.8 ppm, integral value ÷ 1
NH proton of a keto-form of the methanetricarbonyl structure represented by General Formula (V): in the vicinity of 7.3 ppm, integral value ÷ 1
It is preferable that the blocked polyisocyanate composition of the present embodiment include a blocked isocyanurate trimer. The term "blocked isocyanurate trimer" as used herein means that at least a part (preferably all) of the isocyanate groups in the isocyanurate trimer are blocked by a blocking agent.
The content of the blocked isocyanurate trimer is preferably 12% by mass or more, more preferably from 12% by mass to 50% by mass, and still more preferably from 15% by mass to 45% by mass, with respect to the solid content of the blocked polyisocyanate composition. By setting the content of the blocked isocyanurate trimer within the above range, there is a tendency that the heat resistance of the obtained coating film is further improved.
The content of the blocked isocyanurate trimer can be calculated, for example, using the following method.
GPC measurement is performed on the blocked polyisocyanate composition. Next, a ratio of the area of the blocked isocyanurate trimer to the area of the entire blocked polyisocyanate composition is determined from the obtained measurement results, and the ratio can be defined as the content of the blocked isocyanurate trimer in the blocked polyisocyanate composition.

<Other Additives>

The polyisocyanate composition of the present embodiment is not particularly limited, and may further include an additive such as an active hydrogen group-containing compound, a hydrophilicity-improving additive, and a solvent.

[Active Hydrogen Group-Containing Compound]

In the case where the polyisocyanate composition of the present embodiment is a blocked polyisocyanate composition, it is possible to achieve both low-temperature curability and storage stability, and improve the both.
The active hydrogen group contained in the active hydrogen group-containing compound is preferably a hydroxy group or an amino group.
That is, the active hydrogen group-containing compounds are preferably, for example, monoalcohols, dialcohols, or amines. These monoalcohols, dialcohols, and amines may be linear or branched.

(Monoalcohols)

Examples of the monoalcohols include (1) aliphatic alcohols, (2) mono (or oligo)-ethylene glycol monoalkyl ethers, (3) mono (or oligo)-propylene glycol monoalkyl ethers, (4) mono (or oligo)-ethylene glycol monoesters, and (5) mono (or oligo)-propylene glycol monoesters. These monoalcohols may be contained alone or in combination of two or more kinds thereof.

(1) Examples of the aliphatic alcohols include methanol, ethanol, n-propanol, 2-propanol, n-butanol, isobutanol, tert-butanol, 2-butanol, 2-ethyl 1-butanol, isoamyl alcohol, n-pentanol, isopentanol, 2-methyl-1-pentanol, 2-methyl-1-pentanol, hexanol, 2-ethylhexanol, n-heptanol, 2-heptanol, heptanol, octanol, nonanol, decanol, undecanol, dodecanol, tridecanol, tetradecanol, pentadecanol, hexadecanol, heptadecanol, octadecanol, 2-methoxyethanol, 2-ethoxyethanol, 2-butoxyethanol, and isomeric alcohols thereof.

(2) Examples of the mono (or oligo)-ethylene glycol monoalkyl ethers include ethylene glycol monoalkyl ethers, diethylene glycol monoalkyl ethers, triethylene glycol monoalkyl ethers, and tetraethylene glycol monoalkyl ethers.

(3) Examples of the mono (or oligo)-propylene glycol monoalkyl ethers include propylene glycol monoalkyl ethers, dipropylene glycol monoalkyl ethers, tripropylene glycol monoalkyl ethers, and tetrapropylene glycol monoalkyl ethers.

(4) Examples of the mono (or oligo)-ethylene glycol monoesters include ethylene glycol monoesters, diethylene glycol monoesters, triethylene glycol monoesters, and tetraethylene glycol monoesters.

(5) Examples of the mono (or oligo)-propylene glycol monoesters include propylene glycol monoesters, dipropylene glycol monoesters, tripropylene glycol monoesters, and tetrapropylene glycol monoesters.

(Dialcohols)

Examples of the dialcohols include ethylene glycol, 1,2-propanediol, 1,3-propanediol, 1,2-butanediol, 1,3-butanediol, 1,4-butanediol, 1,5-pentanediol, 1,2-pentanediol, 1,6-hexanediol, 1,7-heptanediol, 1,8-octanediol, 1,9-nonanediol, 2-ethyl-1,6-hexanediol, 2-methyl-1,3-propanediol, 3-methyl-1,5-pentanediol, neopentyl glycol, 1,3-cyclohexanediol, 1,4-cyclohexanediol, and 1,4-dimethylolcyclohexane. These dialcohols may be included alone or in combination of two or more kinds thereof.

(Amines)

Examples of the amines include (1) a primary amine, (2) a linear secondary amine, (3) a branched secondary amine, (4) a secondary amine containing an unsaturated double bond, (5) an asymmetric secondary amine, and (6) a secondary amine having an aromatic substituent. These amines may be contained alone or in combination of two or more kinds thereof.

(1) Examples of the primary amine include methylamine, ethylamine, propylamine, butylamine, and isobutylamine.

(2) Examples of the linear secondary amine include dimethylamine, diethylamine, dipropylamine, dibutylamine, dipentylamine, dihexylamine, dioctylamine, dilaurylamine, ditridecylamine, and distearylamine.

(3) Examples of the branched secondary amine include diisopropylamine, isobutylamine, di(2-butylamine), di(tert-butyl)amine, di(2-ethylhexyl)amine, dicyclohexylamine, and di(2-methylcyclohexyl)amine.

(4) Examples of the unsaturated double bond-containing secondary amine include diallylamine.

(5) Examples of the asymmetric secondary amine include methylethylamine, N-methylisopropylamine, methyl tert-butylamine, N-methylhexylamine, ethyl tert-butylamine, N-ethylhexylamine, N-ethyl-1,2-dimethylpropylamine, N-ethylisoamylamine, N-ethyllaurylamine, N-ethylstearylamine, N-methylcyclohexylamine, N-ethylcyclohexylamine, and N-tert-butylcyclohexylamine.

(6) Examples of the secondary amine having an aromatic substituent include diphenylamine, dibenzylamine, methylbenzylamine, ethylbenzylamine, tert-butylbenzylamine, N-methylaniline, N-ethylaniline, N-cyclohexyl. Examples include aniline, and ethyl 3-(benzylamino) propionate.

The blocked polyisocyanate composition of the present embodiment may include one kind or two or more kinds of the active hydrogen group-containing compounds shown above.

Among those, as the active hydrogen group-containing compound, the monoalcohols are preferable, the secondary monoalcohols are more preferable, and 2-propanol or isobutanol is still more preferable since both low-temperature curability and storage stability can be achieved, and the both can be further improved.

In the blocked polyisocyanate composition of the present embodiment, the molar content of the active hydrogen group-containing compound can be optionally selected, but is preferably from 10% by mole to 1,000% by mole, more preferably from 50% by mole to 950% by mole, and still more preferably from 50% by mole to 800% by mole, with respect to the total molar amount of the blocked isocyanate groups in the blocked polyisocyanate composition.

(Hydrophilicity-Improving Additive)

The polyisocyanate composition of the present embodiment can further improve water dispersion stability by the addition of a hydrophilicity-improving agent. Examples of such an additive include nonionic compounds, cationic compounds, anionic compounds, and amphoteric compounds.

Specific examples of the nonionic compound include an ether type compound, an ester type compound, and an alkanolamide type compound. Specific examples of the ether type compound include a compound obtained by adding

ethylene oxide to a higher alcohol having 10 to 18 carbon atoms, a compound obtained by adding ethylene oxide to an alkylphenol, a compound obtained by adding ethylene oxide to a polypropylene alcohol, and a compound obtained by adding ethylene oxide to a fatty acid ester of a polyhydric alcohol. Specific examples of the ester type compound include a fatty acid ester of a higher alcohol, such as glycerin and sorbitan. Specific examples of the alkanolamide type compound include a reaction product of a fatty acid and diethanolamine.

Specific examples of the cationic compound include a quaternary ammonium salt type compound and an alkylamine salt type compound.

Specific examples of the anionic compound include a fatty acid salt type compound, an alkyl sulfate compound, an alkylbenzene sulfonate type compound, a sulfosuccinate type compound, and an alkyl phosphate type compound.

Specific examples of the amphoteric compound include an alkyl betaine type compound and a fatty acid amidopropyl betaine type compound.

(Solvent)

Examples of the solvent include 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether, propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, 2-ethylhexanol, cyclohexanol, ethylene glycol, diethylene glycol, triethylene glycol, propylene glycol, dipropylene glycol, 1,4-butanediol, 1,3-butanediol, ethyl acetate, isopropyl acetate, butyl acetate, toluene, xylene, pentane, iso-pentane, hexane, isohexane, cyclohexane, solvent naphtha, and mineral spirit. These solvents may be used alone or in combination of two or more kinds thereof. From the viewpoint of dispersibility in water, the solvent is preferably one having a solubility in water of 5% by mass or more, and specifically, dipropylene glycol monomethyl ether is preferable.

<Method for Producing (Blocked) Polyisocyanate Composition>

The polyisocyanate composition of the present embodiment is obtained, for example, by the following production method. First, the isocyanate group of the diisocyanate is reacted with the hydroxy group of the polyol.

The molar ratio (NCO/OH) of the isocyanate group of the diisocyanate to the hydroxy group of the polyol is preferably from 3/1 to 30/1, and more preferably from 10/1 to 20/1. By setting the NCO/OH ratio to the lower limit value or more, it is possible to effectively suppress an excessive increase in the viscosity of the obtained polyisocyanate composition. On the other hand, by setting the NCO/OH ratio to the upper limit value or less, it is possible to effectively suppress a decrease in the productivity of the obtained polyisocyanate composition.

The reaction temperature is preferably from 50°C to 200°C, and more preferably from 50°C to 150°C. By setting the reaction temperature to the lower limit value or more, the reaction proceeds more efficiently, whereas by setting the reaction temperature to the upper limit value or less, it is possible to more effectively suppress unpreferable side reactions such as coloring of the obtained polyisocyanate composition. The reaction time is preferably in the above range from 0.5 hours to 5 hours.

It is preferable to perform an isocyanuration reaction after or simultaneously with the reaction between the isocyanate group of the diisocyanate and the hydroxy group of the polyol. By performing the isocyanuration reaction, it is possible to further improve the hardness of the coating film. The reaction temperature for isocyanuration is preferably from 50°C to 200°C, and more preferably from 50°C to 150°C. By setting the reaction temperature to the lower limit value or more, the reaction proceeds more efficiently, whereas by setting the reaction temperature to the upper limit value or less, it is possible to more effectively suppress unpreferable side reactions such as coloring of the obtained polyisocyanate composition.

The isocyanuration catalyst is not particularly limited, but in general, it is preferably basic. Specific examples of the isocyanuration catalyst include the following.

(1) Hydroxides of tetraalkylammonium such as tetramethylammonium, tetraethylammonium; and organic weak salts such as acetate, propionate, octylate, caprate, myristate, and benzoate of the tetraalkylammonium.

(2) Hydroxides of aryltrialkylammoniums such as benzyltrimethylammonium and trimethylphenylammonium; and organic weak salts such as acetate, propionate, octylate, caprate, myristate, and benzoate of the aryltrialkylammonium.

(3) Hydroxides of hydroxyalkylammonium such as trimethylhydroxyethylammonium, trimethylhydroxypropylammonium, triethylhydroxyethylammonium, and triethylhydroxypropylammonium; and organic weak salts such as acetate, propionate, octylate, caprate, myristate, and benzoate of the hydroxyalkylammonium.

(4) Metal salts of tin, zinc, lead, and the like with alkylcarboxylic acids such as acetic acid, propionic acid, caproic acid, octylic acid, capric acid, and myristic acid.

(5) Alcoholates of metals such as sodium and potassium.
(6) Aminosilyl group-containing compounds such as hexamethylene disilazane.
(7) Mannich bases.
(8) A mixture of a tertiary amine and an epoxy compound.
(9) Phosphorus compounds such as tributylphosphine.

Among those, from the viewpoint that unnecessary by-products are hardly generated, the isocyanuration reaction catalyst is preferably a quaternary ammonium hydroxide or an organic weak acid salt of the quaternary ammonium, and more preferably a tetraalkylammonium hydroxide, or an organic weak acid salt of tetraalkylammonium, an aryltrialkylammonium hydroxide, or an organic weak acid salt of aryltrialkylammonium.
In order to stop such a reaction, the catalyst is deactivated. In the case where the catalyst is neutralized to be deactivated, it can be deactivated by the addition of an acidic substance such as phosphoric acid and an acidic phosphoric acid ester, or by thermal decomposition or chemical decomposition.
The yield of the polyisocyanate composition (the mass of the obtained polyisocyanate composition/the total mass of charged raw materials $\times$ 100) is preferably from 10% by mass to 85% by mass, and more preferably from 30% by mass to 80% by mass.
After stopping the reaction, unreacted diisocyanate monomers are preferably removed by a thin film evaporator, extraction, or the like. The concentration of the unreacted diisocyanate in the obtained polyisocyanate composition is preferably 3% by mass or less, more preferably 1% by mass or less, and still more preferably 0.5% by mass or less. By setting the concentration of the unreacted diisocyanate to the upper limit value or less, it is possible to better maintain the curability of the polyisocyanate composition.
In the case where a blocked polyisocyanate composition is produced, it is obtained, for example, by reacting the polyisocyanate composition obtained by the production method with a blocking agent.
The blocking reaction between the polyisocyanate and the blocking agent can be performed irrespective of the presence or absence of a solvent, so as to obtain a blocked polyisocyanate.
As the blocking agent, one kind of compound (I) may be used alone, or compound (I) and two or more kinds selected from the group consisting of the above-mentioned other blocking agents may be used in combination.
The addition amount of the blocking agent may be generally from 80% by mole to 200% by mole, and preferably from 100% by mole to 150% by mole, with respect to the total molar amount of the isocyanate groups.
Moreover, in the case where a solvent is used, a solvent which is inert to the isocyanate group may be used.
In the case where the solvent is used, the content of non-volatile contents derived from the polyisocyanate and the blocking agent with respect to 100 parts by mass of the blocked polyisocyanate composition may be generally from 10 parts by mass to 95 parts by mass, preferably from 20 parts by mass to 80 parts by mass, and more preferably from 30 parts by mass to 70 parts by mass.
At the time of the blocking reaction, an organic metal salt such as tin, zinc, and lead, a tertiary amine-based compound, an alcoholate of an alkali metal such as sodium, or the like may be used as a catalyst.
The addition amount of the catalyst varies depending on the temperature and the like of the blocking reaction, but is usually from 0.05 parts by mass to 1.5 parts by mass, and preferably from 0.1 parts by mass to 1.0 part by mass, with respect to 100 parts by mass of the polyisocyanate.
The blocking reaction is generally performed at a temperature of from -20°C to 150°C, preferably from 0°C to 100°C, and more preferably from 10°C to 70°C. By setting the temperature of the block reaction to the lower limit value or more, it is possible to further increase the reaction rate, and by setting the temperature to the upper limit value or less, it is possible to further suppress side reactions.
After the blocking reaction, a neutralization treatment may be performed by the addition of an acidic compound or the like.
As the acidic compound, either an inorganic acid or an organic acid may be used. Examples of the inorganic acid include hydrochloric acid, phosphorous acid, and phosphoric acid. Examples of the organic acid include methanesulfonic acid, p-toluenesulfonic acid, dioctyl phthalate, and dibutyl phthalate.
Furthermore, in the case where a blocked polyisocyanate composition is produced using a hydrophilic compound and a blocking agent, it can be obtained, for example, by reactions of the polyisocyanate composition obtained by the production method, the hydrophilic compound, and the blocking agent.
A reaction between the isocyanate group of the polyisocyanate composition and the hydrophilic compound, and a reaction between the polyisocyanate composition and the blocking agent can be performed at the same time or after performing either of the reactions in advance and then performing a second reaction. Among those, it is preferable that the reaction between the isocyanate group and the hydrophilic compound be first performed to obtain a polyisocyanate composition (hereinafter, sometimes referred to as a "modified polyisocyanate composition") modified by the hydrophilic compound, and then the reaction of the modified polyisocyanate composition with the blocking agent be performed.
In the reaction between the polyisocyanate composition and the hydrophilic compound, an organic metal salt,

a tertiary amine-based compound, or an alcoholate of an alkali metal may be used as a catalyst. Examples of the metal constituting the organic metal salt include tin, zinc, and lead. Examples of the alkali metal include sodium.

The temperature of the reaction between the polyisocyanate composition and the hydrophilic compound is preferably from -20°C to 150°C, and more preferably from 30°C to 100°C. By setting the reaction temperature to the lower limit value or more, there is a tendency that the reactivity is increased. Further, by setting the reaction temperature to the upper limit value or less, there is a tendency that the side reactions can be more effectively suppressed.

It is preferable to allow the hydrophilic compound to completely react with the polyisocyanate composition so that the hydrophilic compound does not remain in an unreacted state. By allowing the hydrophilic compound not to remain in an unreacted state, there is a tendency that a decrease in the water dispersion stability of the blocked polyisocyanate composition and the curability when formed into a coating film is more effectively suppressed.

For the blocking reaction between the modified polyisocyanate composition and the blocking agent, the method described as the above-mentioned blocking reaction can be used.

<Physical Properties of Blocked Polyisocyanate Composition>

[Non-Volatile Content]

In the blocked polyisocyanate composition of the present embodiment, the non-volatile content is not particularly limited, but from the viewpoint of handling of the blocked polyisocyanate composition, the non-volatile content is preferably from 30% by mass to 80% by mass, and more preferably from 40% by mass to 70% by mass.

Furthermore, the non-volatile content can be calculated using a method shown in Examples described later.

Specifically, first, an aluminum plate is precisely weighed. Then, the blocked polyisocyanate composition with about 1 g of the composition being placed on the aluminum plate is precisely weighed (W1). Next, the blocked polyisocyanate composition is adjusted to a uniform thickness. Subsequently, the blocked polyisocyanate composition placed on the aluminum plate is held in an oven at 105°C for 1 hour. Then, after the temperature of the aluminum plate reaches room temperature, the blocked polyisocyanate composition remaining on the aluminum plate is precisely weighed (W2). Next, the solid content of the blocked polyisocyanate composition can be calculated from the following equation.

$$\text{Non-volatile content (\% by mass) of blocked polyisocyanate composition} = W2/W1 \times 100$$

[Effective NCO Content Ratio]

In the blocked polyisocyanate composition of the present embodiment, the effective NCO content ratio is not particularly limited, but is preferably from 1% by mass to 15% by mass, more preferably from 2% by mass to 10% by mass, and still more preferably from 3% by mass to 9% by mass, from the viewpoint that the storage stability of the blocked polyisocyanate composition becomes better.

The effective NCO content ratio can be calculated using the following equation.

Effective NCO content ratio (% by mass) = [(Non-volatile content (% by mass) of blocked polyisocyanate composition) × {(Mass of polyisocyanate used in blocking reaction) × (NCO content ratio (% by mass) of polyisocyanate)] /(Mass of blocked polyisocyanate composition after the blocking reaction)

«Coating Material Composition»

The coating material composition of the present embodiment includes the above-mentioned polyisocyanate composition or the above-mentioned blocked polyisocyanate composition, and a polyhydric hydroxy compound.

In the case where the coating material composition of the present embodiment includes the above-mentioned blocked polyisocyanate composition, it can be used as a one-component type coating material composition including a curing agent component and a main agent component.

By using the coating material composition of the present embodiment, a coating film having excellent adhesiveness and low-temperature curability can be obtained.

The components of the coating material composition of the present embodiment will be described in detail below.

<Polyhydric Hydroxy Compound>

In the present specification, the "polyhydric hydroxy compound" means a compound having at least two hydroxy

groups (hydroxy groups) in one molecule and is also called a "polyol".

Specific examples of the polyhydric hydroxy compound include aliphatic hydrocarbon polyols, polyether polyols, polyester polyols, epoxy resins, fluorine-containing polyols, and acrylic polyols.

Among those, the polyhydric hydroxy compounds are preferably the polyester polyols, the fluorine-containing polyols, or the acrylic polyols.

[Aliphatic Hydrocarbon Polyols]

Examples of the aliphatic hydrocarbon polyols include polybutadiene having a hydroxy group at the terminal, and a hydrogenated product thereof.

[Polyether Polyols]

Examples of the polyether polyols include those obtained by any of the following methods (1) to (3).

(1) Polyether polyols or polytetramethylene glycols obtained by adding an alkylene oxide alone or in mixture thereof to a polyhydric alcohol alone or a mixture thereof.
(2) Polyether polyols obtained by reacting a polyfunctional compound with an alkylene oxide.
(3) So-called polymer polyols obtained by polymerizing acrylamide or the like with the polyether polyols obtained in (1) or (2) as a medium.

Examples of the polyhydric alcohol include glycerin and propylene glycol.

Examples of the alkylene oxide include ethylene oxide and propylene oxide.

Examples of the polyfunctional compound include ethylenediamine and ethanolamines.

[Polyester Polyols]

Examples of the polyester polyols include any of the following polyester polyols (1) and (2).

(1) Polyester polyol resins obtained by a condensation reaction of a dibasic acid alone or a mixture of two or more kinds thereof with a polyhydric alcohol alone or a mixture of two or more kinds thereof.
(2) Polycaprolactones obtained by ring-opening polymerization of ε-caprolactone with a polyhydric alcohol.

Examples of the dibasic acid include carboxylic acids such as succinic acid, adipic acid, dimer acid, maleic anhydride, phthalic anhydride, isophthalic acid, terephthalic acid, and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, and ethoxylated trimethylolpropane.

[Epoxy Resins]

Examples of the epoxy resins include epoxy resins such as novolak type epoxy resins, β-methyl epichloro type epoxy resins, cyclic oxirane type epoxy resins, glycidyl ether type epoxy resins, glycol ether type epoxy resins, epoxy type aliphatic unsaturated compounds, epoxidized fatty acids, ester-type polycarboxylic acids, aminoglycidyl-type epoxy resins, halogenated-type epoxy resins, and resorcinol-type epoxy resins; and resins obtained by modifying these epoxy resins with amino compounds, polyamide compounds, or the like.

[Fluorine-Containing Polyols]

Examples of the fluorinated polyols include copolymers such as fluoroolefins, cyclohexylvinyl ethers, hydroxyalkyl vinyl ether, and vinyl monocarboxylate esters, disclosed in Reference 1 (Japanese Unexamined Patent Application, First Publication No. S57-34107), Reference 2 (Japanese Unexamined Patent Application, First Publication No. S61-275311), and the like.

[Acrylic Polyols]

The acrylic polyols can be obtained, for example, by polymerizing polymerizable monomers having one or more active hydrogen atoms in one molecule, or copolymerizing polymerizable monomers having one or more active hydrogen

atoms in one molecule, as necessary, with other monomers which are copolymerizable with the polymerizable monomers.
Examples of the polymerizable monomers having one or more active hydrogen atoms in one molecule include those shown in (i) to (iii) below. These may be used alone or in combination of two or more kinds thereof.

(i) Acrylic acid esters having active hydrogen, such as 2-hydroxyethyl acrylate, 2-hydroxypropyl acrylate, and 2-hydroxybutyl acrylate.
(ii) Methacrylic acid esters having active hydrogen, such as 2-hydroxyethyl methacrylate, 2-hydroxypropyl methacrylate, and 2-hydroxybutyl methacrylate.
(iii) (Meth)acrylates having polyhydric active hydrogen, such as acrylic acid monoesters or methacrylic acid monoesters of glycerin, and acrylic acid monoesters or methacrylic acid monoesters of trimethylolpropane.

Examples of other monomers which are copolymerizable with the polymerizable monomers include those shown in (i) to (v) below. These may be used alone or in combination of two or more kinds thereof.

(i) Acrylic acid esters such as methyl acrylate, ethyl acrylate, isopropyl acrylate, n-butyl acrylate, and 2-ethylhexyl acrylate.
(ii) Methacrylic acid esters such as methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate.
(iii) Unsaturated carboxylic acids such as acrylic acid, methacrylic acid, maleic acid, and itaconic acid.
(iv) Unsaturated amides such as acrylamide, N-methylolacrylamide, and diacetoneacrylamide;
(v) Styrene, vinyl toluene, vinyl acetate, acrylonitrile, and the like.

Moreover, other examples of the monomers include acrylic polyols obtained by copolymerizing polymerizable ultraviolet-stable monomers disclosed in Reference 3 (Japanese Unexamined Patent Application, First Publication No. H1-261409) and Reference 4 (Japanese Unexamined Patent Application, First Publication No. H3-006273).
Specific examples of the polymerizable UV-stable monomers include 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine, and 2-hydroxy-4-(3-methacryloxy-2-hydroxypropoxy)benzophenone.
The acrylic polyol can be obtained, for example, by solution-polymerizing the monomer components in the presence of a known radical polymerization initiator such as a peroxide and an azo compound, and diluting the product with an organic solvent or the like as necessary.
In the case where an aqueous base acrylic polyol is obtained, it can be produced by a known method such as a method in which an olefinically unsaturated compound is solution-polymerized and converted into an aqueous layer, and emulsion polymerization. In this case, water-solubility or water dispersibility can be imparted by neutralizing acidic moieties of carboxylic acid-containing monomers such as acrylic acid and methacrylic acid or sulfonic acid-containing monomers with amine or ammonia.

[Hydroxyl Value and Acid Value of Polyhydric Hydroxy Compound]

The hydroxyl value of the polyhydric hydroxy compound included in the coating material composition of the present embodiment is preferably from 10 mgKOH/g to 300 mgKOH/g.
By setting the hydroxy group of the polyhydric hydroxy compound to the lower limit value or more, the crosslinking density of urethane by the reaction with the polyisocyanate is further increased, and thus, the function of the urethane bond is more easily exerted. On the other hand, by setting the hydroxy group of the polyhydric hydroxy compound to the upper limit value or less, the crosslinking density does not increase excessively, and the mechanical properties of the coating film are improved better.

[NCO/OH]

The molar equivalent ratio (NCO/OH) of the isocyanate group of the (blocked) polyisocyanate composition to the hydroxy group of the polyhydric hydroxy compound included in the coating material composition of the present embodiment is determined by the physical properties required for the coating film, but is usually is from 0.1 to 22.5.

<Other Additives>

The coating material composition of the present embodiment may further include other additives.
Examples of such other additives include a curing agent which can react with the crosslinkable functional group

in the polyhydric hydroxy compound, a curing catalyst, a solvent, pigments (an extender pigment, a coloring pigment, a metallic pigment, and the like), an ultraviolet absorber, a light stabilizer, a radical stabilizer, an anti-yellowing agent which suppresses coloring during a baking step, a coating surface-adjusting agent, a flow-adjusting agent, a pigment dispersant, an anti-foaming agent, a thickening agent, and a film-forming aid.

In addition, the above-mentioned active hydrogen group-containing compound may be added not only to the above-mentioned blocked polyisocyanate composition but also to the coating material composition of the present embodiment.

Examples of the curing agent include a melamine resin, a urea resin, an epoxy group-containing compound or resin, a carboxyl group-containing compound or resin, an acid anhydride, an alkoxysilane group-containing compound or resin, and a hydrazide compound.

The curing catalyst may be either a basic compound or a Lewis acidic compound.

Examples of the basic compound include a metal hydroxide, a metal alkoxide, a metal carboxylate, a metal acetyl acetate, a hydroxide of an onium salt, an onium carboxylate, a halide of an onium salt, a metal salt of an active methylene compound, an onium salt of a methylene compound, aminosilanes, amines, and phosphines. As the onium salt, an ammonium salt, a phosphonium salt, or a sulfonium salt is preferable.

Examples of the Lewis acidic compound include an organic tin compound, an organic zinc compound, an organic titanium compound, and an organic zirconium compound.

Examples of the solvent include the same as those exemplified in the above-mentioned polyisocyanate composition.

Furthermore, as the pigments (an extender pigment, a coloring pigment, a metallic pigment, and the like), the ultraviolet absorber, the light stabilizer, the radical stabilizer, the anti-yellowing agent which suppresses coloring during a baking step, the coating surface-adjusting agent, the flow-adjusting agent, the pigment dispersant, the anti-foaming agent, the thickening agent, and the film-forming aid, those appropriately selected form known ones can be used.

<Method for Producing Coating Material Composition>

The coating material composition of the present embodiment can be used in both a solvent base and an aqueous base.

In the case where an aqueous base coating material composition (aqueous coating material composition) is produced, first, if necessary, an additive such as a curing agent which can react with a crosslinkable functional group in the polyhydric hydroxy compound, a curing catalyst, a solvent, pigments (an extender pigment, a coloring pigment, a metallic pigment, and the like), an ultraviolet absorber, a light stabilizer, a radical stabilizer, an anti-yellowing agent that suppresses coloring during a baking step, a coating surface adjuster, a flow adjuster, a pigment dispersant, an anti-foaming agent, a thickener, and a film-forming aid is added to the polyhydric hydroxy compound or a water dispersion thereof. Then, the above-mentioned (blocked) polyisocyanate composition or a water dispersion thereof is added as a curing agent, and if necessary, water or a solvent is further added thereto to adjust the viscosity. Next, by forcibly stirring with a stirrer, an aqueous base coating material composition (aqueous coating material composition) can be obtained.

In the case where a solvent-base coating material composition is produced, first, if necessary, an additive such as a curing agent which can react with a crosslinkable functional group in the polyhydric hydroxy compound, a curing catalyst, a solvent, pigments (an extender pigment, a coloring pigment, a metallic pigment, and the like), an ultraviolet absorber, a light stabilizer, a radical stabilizer, an anti-yellowing agent that suppresses coloring during a baking step, a coating surface adjuster, a flow adjuster, a pigment dispersant, an anti-foaming agent, a thickener, and a film-forming aid is added to the polyhydric hydroxy compound or a dilution thereof in a solvent. Then, the above-mentioned (blocked) polyisocyanate composition is added as a curing agent, and if necessary, a solvent is further added to adjust the viscosity. Then, by performing stirring manually or using a stirring device such as a Mazelar or the like, a solvent-based coating material composition can be obtained.

«Coating Film»

The coating film of the present embodiment is obtained by curing the above-mentioned coating material composition.

The coating film of the present embodiment is obtained by coating the above-mentioned coating material composition using a known method such as roll coating, curtain flow coating, spray coating, bell coating, and electrostatic coating, and curing by maintaining at a temperature from 60°C to 160°C for several minutes to several hours.

The coating film of the present embodiment has good adhesiveness to an object to be coated and low-temperature curability. The object to be coated is not particularly limited, and examples thereof include a molded article formed by molding a material such as a metal (a steel plate, a surface-treated steel plate, and the like), plastic, wood, a film, and an inorganic material. In addition, the shape of the molded article is not particularly limited, and for example, the

molded article may be one having a small thickness, such as a film, a sheet, a board, or the like, or may be one having a large thickness, such as a column, a steric structure, or the like. Further, the molded article may also be a hollow member such as a tube.

## Examples

Hereinafter, the present embodiment will be described in more detail with reference to Examples and Comparative Examples, but the present embodiment is not limited to the following Examples.

In the Examples and Comparative Examples, "parts" are based on mass. "%" In Examples and Comparative Examples is "% by mass".

<Test Items>

Each of the physical properties of the polyisocyanate compositions obtained in Examples and Comparative Examples was measured and evaluated according to methods shown below.

[Physical Property 1]

(Yield)

The yield was calculated from the following equation.

$$\text{Yield (\%)} = \text{Mass of polyisocyanate composition obtained/Total mass of charged raw materials} \times 100$$

[Physical Property 2]

(HDI/IPDI)

The mass ratio of the structural unit derived from HDI to the structural unit derived from IPDI in the polyisocyanate composition (HDI/IPDI) was calculated using the following method. First, the mass of an unreacted HDI and the mass of an unreacted IPDI were calculated from the mass of the unreacted diisocyanate after the reaction and the concentration of HDI and the concentration of IPDI in the unreacted diisocyanate obtained by gas chromatography measurement. After subtracting the mass of the unreacted HDI and the mass of the unreacted IPDI, each calculated above, respectively, from the mass of HDI and the mass of IPDI, each charged, the differences thus obtained were defined as the mass of the structural unit derived from HDI and the mass of the structural unit derived from IPDI, respectively. Then, HDI/IPDI was obtained by dividing the mass of the structural unit derived from HDI by the mass of the structural unit derived from IPDI.

[Physical Property 3]

(Content of Structural Unit Derived from Polyol)

The content of the structural unit derived from the polyol (hereinafter sometimes abbreviated as a "PO content") was calculated using the following method.

$$\text{PO Content (\% by mass)} = \text{Mass of charged PO/Mass of obtained polyisocyanate composition} \times 100$$

[Physical Property 4]

(Molecular Weight of Polyisocyanate Composition)

Using the polyisocyanate composition as a sample, the number-average molecular weight (Mn) and the weight-average molecular weight (Mw) were measured by GPC under the following measurement conditions and determined as the molecular weight in terms of polystyrene.

(Measurement Conditions)

Device: HLC-8320GPC (TOSOH)
Columns: TSKgel Super H2500 × 1 (TOSOH)
TSKgel Super H4000 × 1 (TOSOH)
TSKgel Super H5000 × 1 (TOSOH)
TSKgel Super H6000 × 1 (TOSOH)
Carrier: Tetrahydrofuran
Flow rate: 0.6 mL/min
Sample concentration: 1.0% by mass
Injection volume: 20 μL
Temperature: 40°C
Detection method: Differential refractometer

[Physical Property 5]

(Isocyanate Group (NCO) Content Ratio)

1 g to 3 g of the polyisocyanate composition was precisely weighed in a flask (Wg). Then, 20 mL of toluene was added thereto to dissolve the polyisocyanate composition. Next, 10 mL of a 2 N toluene solution of di-n-butylamine was added thereto and mixed, and the mixture was allowed to stand at room temperature for 15 minutes. Subsequently, 70 mL of isopropyl alcohol was added thereto and mixed. Then, this solution was titrated with a 1 N hydrochloric acid solution (Factor F) as an indicator. The obtained titration value was V2 mL. Next, the same operation was performed without the polyisocyanate and the obtained titration value was set to VI ml. Subsequently, the isocyanate group (NCO) content ratio of the polyisocyanate composition was calculated from the following equation.

$$\text{NCO content ratio [\% by mass]} = (V1 - V2) \times F \times 42/(W \times 1{,}000) \times 100$$

[Physical Property 6]

(Average Number of Isocyanate Functional Groups (Average Number of NCO))

Using the polyisocyanate composition as a sample, the number of isocyanate average functional groups (average number of NCO) was determined by the following equation.

$$\text{Average number of isocyanate (NCO)} = (\text{Mn} \times \text{NCO content ratio} \times 0.01)/42$$

[Evaluation 1]

(Adhesiveness of Coating Film)

An acrylic polyol (Setalux 1767 (trade name) manufactured by Allnex Co., hydroxyl value of resin content of 150 mgKOH/g, resin content 65%) and each polyisocyanate composition were blended such that a ratio of the molar amount of the isocyanate group to the molar amount of the hydroxy group (isocyanate group/hydroxy group) became 1.0, and butyl acetate was further blended therewith such that the solid content became 40% by mass, thereby obtaining a coating material composition.

Subsequently, an ABS plate was coated with the obtained coating material composition such that the dry film thickness became 40 μm, and then dried by heating at 80°C for 30 minutes, thereby obtaining a cured coating film. Using a cutter guide with a gap interval of 2 mm, 100 grid-shaped cuts penetrating the coating film were made on the obtained coating film. Thereafter, a cellophane pressure-sensitive adhesive tape (manufactured by Nichiban Co., Ltd., No. 405: 24 mm width) was adhered onto a surface of the grid-shaped cut and rubbed with an eraser to completely

adhere the cellophane pressure-sensitive adhesive tape to the coating film. Thereafter, an operation in which the cellophane pressure-sensitive adhesive tape was rapidly peeled off from the coating film was performed at a peeling angle of 180°, and then the peeled surface was observed to count the number of peeled grids. The evaluation standard for adhesiveness was as follows.

(Evaluation Standard)

A: The number of peeled grids is 0.
B: The number of peeled grids is from 1 to 20.
C: The number of peeled grids is from 21 to 40.
D: The number of peeled grids is 41 or more.

[Evaluation 2]

(Low-Temperature Curability of Coating Film)

Each of the coating material compositions was prepared using the same method as in "Evaluation 1". Subsequently, a polypropylene plate was coated with the obtained coating material composition such that the dry film thickness became 40 μm, then dried by heating at 60°C for 5 minutes, and dried under the conditions of 23°C and RH of 50% for 3 days, thereby obtaining a cured coating film. The gel fraction of the obtained coating film was measured and the low-temperature curability was evaluated in accordance with the following evaluation standard. In addition, the gel fraction was determined as a percentage (% by mass) of a value obtained by immersing the coating film in acetone at 23°C for 24 hours and dividing the mass of the undissolved portion by the mass before immersion.

(Evaluation Standard)

A: The gel fraction is 90% by mass or more.
B: The gel fraction is from 85% by mass to 90% by mass.
C: The gel fraction is from 80% by mass to 85% by mass.
D: The gel fraction is less than 80% by mass.

[Evaluation 3]

(Water-Resistant Adhesiveness of Coating Film)

Each of the coating material compositions was prepared using the same method as in "Evaluation 1". Subsequently, an ABS plate was coated with the obtained coating material composition such that the dry film thickness became 40 μm, and then dried by heating at 80°C for 30 minutes, thereby obtaining a cured coating film. The obtained coating film was immersed in warm water at 50°C for 30 days to wipe off the surface water. Then, 100 grid-shaped cuts penetrating the coating film were made using a cutter guide with a gap interval of 2 mm. Thereafter, a cellophane pressure-sensitive adhesive tape (manufactured by Nichiban Co., Ltd., No. 405: 24 mm width) was adhered onto a surface of the grid-shaped cut and rubbed with an eraser to completely adhere to the coating film. Thereafter, an operation in which the cellophane pressure-sensitive adhesive tape was rapidly peeled off from the coating film was performed at a peeling angle of 45°, and then the peeled surface was observed to count the number of peeled grids. The evaluation standard for adhesiveness was as follows.

(Evaluation Standard)

A: The number of peeled grids is 0.
B: The number of peeled grids is 1 or more and 20 or less, or floating at the ends of the grids is observed.
C: The number of peeled grids is from 21 to 40.
D: The number of peeled grids is 41 or more.

<Production of Polyisocyanate Composition>

[Raw Materials]

(Polyol)

TMP: Trimethylolpropane
PLC303: PLACCEL303 (trade name) (manufactured by Daicel Corporation, average number of OH: 3, number-average molecular weight 310)
PLC305: PLACCEL305 (trade name) (manufactured by Daicel Corporation, average number of OH: 3, number-average molecular weight 550)
PLC308: PLACCEL308 (trade name) (manufactured by Daicel Corporation, average number of OH: 3, number-average molecular weight 850)
PLC312: PLACCEL312 (trade name) (manufactured by Daicel Corporation, average number of OH: 3, number-average molecular weight 1250)
PLC320: PLACCEL320 (trade name) (manufactured by Daicel Corporation, average number of OH: 3, number-average molecular weight 2000)
PLC410: PLACCEL410 (trade name) (manufactured by Daicel Corporation, average number of OH: 4, number-average molecular weight 1030)
P3403: PLACCELP3403 (trade name) (manufactured by Daicel Corporation, average number of OH: 3, number-average molecular weight 4000)

[Example 1] Production of Polyisocyanate Composition P-a1 (reference example)

The inside of a four-necked flask equipped with a stirrer, a thermometer, a reflux condenser, a nitrogen blowing tube, and a dropping funnel was turned to a nitrogen atmosphere, 600 parts by mass of HDI and a half amount of 79 parts by mass of PLC305 were charged and kept for 30 minutes at a temperature of 80°C in the reactor, and then the remaining half amount of PLC305 was added thereto to further perform a urethanization reaction for 1 hour. The temperature of the insider of the reactor was set to 70°C, tetramethylammonium hydroxide was added thereto, and at a point of time when the yield became 53%, phosphoric acid was added to stop the reaction. After filtering the reaction solution, unreacted HDI was removed by a thin film distillation apparatus to obtain a polyisocyanate composition P-a1.

[Examples 2 to 9] Production of Polyisocyanate Compositions P-a2 to P-a9 (Examples 2 to 7 are reference examples)

Each of the polyisocyanate compositions was produced at a blend ratio shown in Tables 1 and 2, using the same apparatus and method as in Example 1.

[Comparative Examples 1 and 2] Production of Polyisocyanate Compositions P-b1 and P-b2

Using the same apparatus as in Example 1, all the raw materials were charged at a blend ratio shown in Tables 1 and 2, and the temperature of the inside of the reactor was kept at 90°C for 1 hour with stirring to perform a urethanization reaction. Thereafter, each of the polyisocyanate compositions was produced using the same method as in Example 1.

[Table 1]

| | | | Example 1 | Example 2 | Example 3 | Example 4 | Example 5 | Example 6 | Example 7 | Comparative Example 1 |
|---|---|---|---|---|---|---|---|---|---|---|
| Polyisocyanate composition | | | P-a1 | P-a2 | P-a3 | P-a4 | P-a5 | P-a6 | P-a7 | P-b1 |
| Composition | HDI | g | 600 | 600 | 600 | 600 | 600 | 600 | 600 | 600 |
| | IPDI | g | | | | | | | | |
| | Polyol | Type | PLC305 | PLC308 | PLC312 | PLC312 | PLC320 | PLC410 | P3403 | PLC303 |
| | | Average number of OH | 3 | 3 | 3 | 3 | 3 | 4 | 3 | 3 |
| | | Mass (g) | 79 | 122 | 179 | 298 | 287 | 111 | 794 | 60 |
| Physical properties | Yield | % | 53% | 55% | 59% | 64% | 64% | 55% | 77% | 47% |
| | HDI/IPDI | | 100/0 | 100/0 | 100/0 | 100/0 | 100/0 | 100/0 | 100/0 | 100/0 |
| | PO Content | % by mass | 22% | 31% | 39% | 52% | 51% | 29% | 74% | 19% |
| | Molecular weight | Mn | 1,520 | 1,820 | | | 2,580 | 2,054 | 4,620 | 1,450 |
| | | Mw | 5,340 | 9,870 | 1,950 10,510 5.4 | 2,200 18,300 8.3 | 28,220 | 15,129 | 48,500 | 4,920 |
| | | Mw/Mn | 3.5 | 5.4 | | | 10.9 | 7.4 | 10.5 | 3.4 |
| | NCO Content ratio | % by mass | 16.7% | 15.0% | 13.4% | 11.5% | 11.1% | 15.5% | 8.0% | 17.6% |
| | Average number of NCO | | 6.0 | 6.5 | 6.2 | 6.0 | 6.8 | 7.6 | 8.8 | 6.1 |
| Evaluation | Adhesiveness | | B | A | A | A | A | A | A | C |
| | Low-temperature curability | | B | B | A | A | A | A | A | C |
| | Water-resistance adhesiveness | | B | B | B | B | A | B | A | C |
| Note: Examples 1 to 7 are reference examples | | | | | | | | | | |

[Table 2]

| | | | Example 8 | Example 9 | Comparative Example 2 |
|---|---|---|---|---|---|
| Polyisocyanate composition | | | P-a8 | P-a9 | P-b2 |
| Composition | HDI | g | 600 | 600 | 640 |
| | IPDI | g | 257 | 257 | 160 |
| | Polyol | Type | PLC308 | PLC312 | TMP |
| | | Average number of OH | 3 | 3 | 3 |
| | | Mass (g) | 176 | 259 | 27 |
| Physical properties | Yield | % | 53% | 56% | 44% |
| | HDI/IPDI | | 79/21 | 75/25 | 84/16 |
| | PO Content | % by mass | 32% | 41% | 7% |
| | Molecular weight | Mn | 1,697 | 1,892 | 1,190 |
| | | Mw | 7,496 | 10,090 | 3,300 |
| | | Mw/Mn | 4.4 | 5.3 | 2.8 |
| | NCO Content ratio | % by mass | 13.4% | 12.4% | 19.2% |
| | Average number of NCO | | 5.4 | 5.6 | 5.4 |
| Evaluation | Adhesiveness | | B | B | D |
| | Low-temperature curability | | B | A | D |

As can be seen from Table 1, the polyisocyanate compositions P-a1 to P-a7 (Examples 1 to 7) had better adhesiveness to the object to be coated and low-temperature curability when formed into a coating film than the polyisocyanate composition P-b1 (Comparative Example 1).

As can be seen from Table 2, similarly in the polyisocyanate composition containing a structural unit derived from HDI and a structural unit derived from IPDI, the polyisocyanate compositions P-a8 and P-a9 (Examples 8 and 9) had better adhesiveness to the object to be coated and low-temperature curability when formed into a coating film than the polyisocyanate composition P-b2 (Comparative Example 2).

In addition, it can be seen that in the polyisocyanate compositions P-a1 to P-a7 (Examples 1 to 7), there was a tendency that the adhesiveness to the object to be coated when formed into a coating film, the low-temperature curability, and the water-resistant adhesiveness when formed into a coating film were further improved as the number-average molecular weight of the polyol increased.

<Test Items>

Each of the physical properties of the blocked polyisocyanate compositions obtained in Examples and Comparative Examples was measured and evaluated according to methods shown below.

[Physical Property 7] Non-Volatile Content

The non-volatile content of the blocked polyisocyanate composition was determined as follows. First, an aluminum plate having a bottom diameter of 38 mm was precisely weighed. Then, the blocked polyisocyanate composition produced in each of Examples and Comparative Examples with about 1 g of the composition being placed on the aluminum plate was precisely weighed (W1). Next, the blocked polyisocyanate composition was adjusted to a uniform thickness. Subsequently, the blocked polyisocyanate composition placed on the aluminum dish was held in an oven at 105°C for 1 hour. Then, after the temperature of the aluminum dish reaches room temperature, the blocked polyisocyanate composition remaining on the aluminum dish was precisely weighed (W2). Next, the non-volatile content of the blocked

polyisocyanate composition was calculated from the following equation.

$$\text{Non-Volatile Content (\% by mass)} = W2/W1 \times 100$$

[Physical Property 8] Effective Isocyanate Group (NCO) Content Ratio

The effective isocyanate group (NCO) content ratio of the blocked polyisocyanate composition produced in each of Examples and Comparative Examples was determined as follows. Furthermore, the "effective isocyanate group (NCO) content ratio" herein is a value obtained by quantifying the amount of the blocked isocyanate group that can participate in a crosslinking reaction, present in the blocked polyisocyanate composition after the blocking reaction, and the content is expressed in % by mass of isocyanate groups. The effective NCO content ratio was calculated by the following equation. In the following equation, the "NCO content ratio of the polyisocyanate composition" and the "non-volatile content of the blocked polyisocyanate composition" used the values calculated in the above-mentioned physical properties 5 and 7, respectively. In addition, in the case where the sample was diluted with a solvent or the like, a value in the diluted state was calculated.

$$\text{Effective NCO content ratio (\% by mass)} = [(\text{Non-volatile content (\% by mass) of blocked polyisocyanate composition} \times \{(\text{Mass of polyisocyanate composition used for blocking reaction}) \times (\text{NCO content ratio (\% by mass) of polyisocyanate composition}\}]/(\text{Mass of blocked polyisocyanate composition after blocking reaction})$$

[Physical Property 9] Content of Hydrophilic Group

A ratio of the mass of the compound having a hydrophilic group used to the mass of the non-volatile content of the blocked polyisocyanate composition was determined and defined as the content of the hydrophilic group in the blocked polyisocyanate composition.

[Evaluation 4] Low-Temperature Curability of Coating Film

An acrylic dispersion (SETAQUA 6515 (trade name) manufactured by Allnex Co., concentration of resin content: 45%, concentration of hydroxy group of 3.3% (in terms of the resin)) and each polyisocyanate composition were blended such that a ratio of the molar amount of the isocyanate group to the molar amount of the hydroxy group (isocyanate group/hydroxy group) became 1.0. Then, a mixed solution having a ratio of the mass of water to the mass of dipropylene glycol monomethyl ether (water/dipropylene glycol monomethyl ether) of 90/10 was added to the mixture so that the solid content became 35% by mass, thereby obtaining each coating material composition.

Subsequently, a polypropylene plate was coated with the obtained coating material composition such that the dry film thickness became 40 μm, and then dried by heating at 80°C for 30 minutes, thereby obtaining a cured coating film. The gel fraction of the obtained coating film was measured and the low-temperature curability of the coating film was evaluated. The coating film having a gel fraction of less than 80% was considered to be insufficiently cured and subsequent evaluation of the adhesiveness was not carried out.

[Evaluation 5] Adhesiveness of Coating Film

Each of the coating material compositions was prepared using the same method as in "Evaluation 3". Subsequently, an ABS plate was coated with the obtained coating material composition such that the dry film thickness became 40 μm, and then dried by heating at 80°C for 30 minutes, thereby obtaining a cured coating film. Using a cutter guide with a gap interval of 2 mm, 100 grid-shaped cuts penetrating the coating film were made on the obtained coating film. Thereafter, a cellophane pressure-sensitive adhesive tape (manufactured by Nichiban Co., Ltd., No. 405: 24 mm width) was adhered onto a surface of the grid-shaped cut and rubbed with an eraser to completely adhere to the coating film. Thereafter, an operation in which the cellophane pressure-sensitive adhesive tape was rapidly peeled off from the coating

film was performed at a peeling angle of 180°, and then the peeled surface was observed to count the number of peeled grids. The evaluation standard for adhesiveness was as follows.

(Evaluation Standard)

A: The number of peeled grids is 0.
B: The number of peeled grids is from 1 to 10.
C: The number of peeled grids is from 11 to 20.
D: The number of peeled grids is 21.

<Production of Blocked Polyisocyanate Composition>

[Raw Materials]

(Hydrophilic Compound)

H-1: Polyethylene oxide (manufactured by Nippon Emulsifier Co., Ltd., trade name "MPG-081", number-average molecular weight: 690)
H-2: Hydroxypivalic acid (HPA) (molecular weight: 119)

(Blocking Agent)

B-1: Diisopropyl malonate
B-2: Di-tert-butyl malonate
B-3: 2-Ethyl imidazole
B-4: Ethyl acetoacetate

[Example 10] Production of Blocked Polyisocyanate Composition BL-a1 (reference example)

100 g of P-5 obtained in Example 5, 9 g of MPG-081 (hydrophilic compound H-1), and a half amount of 101 g of dipropylene glycol dimethyl ether (DPDM) were charged into a four-necked flask equipped with a thermometer, a stirring blade, and a reflux condenser under a nitrogen gas stream, and the mixture was heated and stirred at 120°C for 2 hours. Then, the reaction solution was cooled to room temperature, 50 g of diisopropyl malonate (blocking agent B-1) and the remaining half of DPDM were charged thereinto, and a methanol solution containing sodium methylate (28% by mass) was added at room temperature to the mixture in the amount such that the amount of sodium became 800 ppm with respect to the resin, thus to perform a blocking reaction at 40°C for 4 hours, thereby obtaining a blocked polyisocyanate composition BL-a1.

[Examples 11 to 14] Production of Blocked Polyisocyanate Compositions BL-a2 to BL-a5

Each of the blocked polyisocyanate compositions was produced in the same manner as in Example 10 except that the formulations described in Table 3 were used.

[Example 15] Production of Blocked Polyisocyanate Composition BL-a6

The formulations shown in Table 3 were charged into the same apparatus as in Example 10 and held at 120°C for 2 hours under heating and stirring. Then, the reaction solution was cooled to room temperature, 31 g of 2-ethyl imidazole (blocking agent B-3) and the remaining half of DPDM were charged thereinto to perform a block reaction at 100°C for 4 hours, thereby obtaining a blocked polyisocyanate composition BL-A6.

[Comparative Examples 3 to 5] Production of Blocked Polyisocyanate Compositions BL-b1 to BL-b3

Each of the blocked polyisocyanate compositions was produced in the same manner as in Example 10 except that the formulations described in Table 4 were used.

[Table 3]

| | | | Example 10 | Example 11 | Example 12 | Example 13 | Example 14 | Example 15 |
|---|---|---|---|---|---|---|---|---|
| Blocked polyisocyanate composition | | | BL-a1 | BL-a2 | BL-a3 | BL-a4 | BL-a5 | BL-a6 |
| Composition | Polyisocyanate composition | Type | P-a5 | P-a8 | P-a9 | P-a8 | P-a8 | P-a8 |
| | | Mass (g) | 100 | 100 | 100 | 100 | 100 | 100 |
| | Hydrophilic compound | Type | H-1 | H-1 | H-1 | H-1 | H-2 | H-1 |
| | | Mass (g) | 9 | 11 | 10 | 11 | 2 | 11 |
| | Blocking agent | Type | B-1 | B-1 | B-1 | B-2 | B-1 | B-3 |
| | | Mass (g) | 50 | 60 | 55 | 69 | 60 | 31 |
| | Solvent | g | 101 | 108 | 105 | 114 | 103 | 91 |
| Physical properties | Non-volatile content | % | 60% | 60% | 60% | 60% | 60% | 60% |
| | Effective NCO | % | 4.1% | 4.6% | 4.3% | 4.3% | 4.8% | 5.5% |
| | Hydrophilic group content | % | 5.7% | 6.4% | 6.1% | 6.1% | 1.2% | 7.6% |
| Evaluation | Low-temperature curability | | 83% | 80% | 82% | 90% | 83% | 85% |
| | Adhesiveness | | A | B | A | C | B | C |
| Note: Example 10 is a reference example | | | | | | | | |

[Table 4]

| | | | Comparative Example 3 | Comparative Example 4 | Comparative Example 5 |
|---|---|---|---|---|---|
| Blocked polyisocyanate composition | | | BL-b1 | BL-b2 | BL-b3 |
| Composition | Polyisocyanate composition | Type | P-b1 | P-b2 | P-b2 |
| | | Mass (g) | 100 | 100 | 100 |
| | Hydrophilic compound | Type | H-1 | H-1 | H-1 |
| | | Mass (g) | 14 | 15 | 15 |
| | Blocking agent | Type | B-1 | B-1 | B-4 |
| | | Mass (g) | 79 | 86 | 59 |
| | Solvent | g | 122 | 127 | 111 |
| Physical properties | Non-volatile content | % | 60% | 60% | 60% |
| | Effective NCO | % | 6.3% | 5.6% | 6.4% |
| | Hydrophilic group content | % | 7.4% | 7.8% | 8.9% |
| Evaluation | Low-temperature curability | | 75% | 75% | 10% |
| | Adhesiveness | | | | |

As can be seen from Tables 3 and 4, in the blocked polyisocyanate compositions BL-a1 to BL-a6 (Examples 10 to 15), the gel fractions were 80% or more and the adhesiveness to the object to be coated when formed into a coating film was good, whereas in the blocked polyisocyanate compositions BL-b1 to BL-b3 (Comparative Examples 3 to 5), the gel fractions were less than 80%.

Furthermore, as can be seen from the comparison of the blocked polyisocyanate compositions BL-a1 to BL-a3 in which different kinds of polyisocyanate compositions were blended, the blocked polyisocyanate compositions BL-a1 and BL-a3 using the polyisocyanate compositions P-a5 and P-a9 (Examples 10 and 12) were particularly excellent in adhesiveness to an object to be coated when formed into a coating film.

In addition, as can be seen from the comparison of the blocked polyisocyanate compositions BL-a2, BL-a4, and BL-a6 (Examples 11, 13, and 15) in which different kinds of blocking agents were blended, in the blocked polyisocyanate composition BL-a2 in which B-1 (diisopropyl malonate) was used as the blocking agent, there was a tendency that the low-temperature curability of a coating film decreased, whereas the adhesiveness to the object to be coated was further improved.

With the polyisocyanate composition of the present invention, it is possible to provide a polyisocyanate composition having excellent adhesiveness and low-temperature curability when formed into a coating film.

## Claims

**1.** A polyisocyanate composition comprising a polyisocyanate obtained from:

an aliphatic diisocyanate and an alicyclic diisocyanate; and
a polyol having a number-average molecular weight from 400 to 5,000 and an average number of hydroxy groups from 3 to 8,
wherein the following conditions (1) to (3) are satisfied:

(1) a content of a structural unit derived from the polyol is from 22% by mass to 80% by mass with respect to a total mass of the polyisocyanate composition;
(2) an average number of isocyanate functional groups is from 3.5 to 20; and

(3) a weight-average molecular weight/a number-average molecular weight is from 3.5 to 15,

wherein the polyisocyanate composition further comprises 12% or more of an isocyanurate trimer with respect to the solid content of the polyisocyanate composition, and

a mass ratio of a structural unit derived from the aliphatic diisocyanate to a structural unit derived from the alicyclic diisocyanate is from 50/50 to 95/5.

**2.** The polyisocyanate composition according to Claim 1,
wherein a number-average molecular weight of the polyol is more than 500 and 5,000 or less.

**3.** The polyisocyanate composition according to Claim 1 or 2,
wherein a part or all of the polyisocyanates has a structural unit derived from a hydrophilic compound.

**4.** The polyisocyanate composition according to Claim 3,
wherein the structural unit derived from the hydrophilic compound includes at least one hydrophilic group selected from the group consisting of a nonionic hydrophilic group and an anionic hydrophilic group.

**5.** A blocked polyisocyanate composition formed by blocking a part or all of the isocyanate groups of the polyisocyanate composition according to any one of Claims 1 to 4 with a blocking agent.

**6.** The blocked polyisocyanate composition according to Claim 5,
wherein the blocking agent is at least one compound selected from the group consisting of an oxime-based compound, a pyrazole-based compound, an imidazole-based compound, a triazole-based compound, and an active methylene-based compound.

**7.** The blocked polyisocyanate composition according to Claim 5 or 6,
wherein the blocking agent is at least one compound selected from the group consisting of the imidazole-based compound, the triazole-based compound, and the active methylene-based compound.

**8.** The blocked polyisocyanate composition according to any one of Claims 5 to 7,
wherein the blocking agent is the active methylene-based compound.

**9.** The blocked polyisocyanate composition according to any one of Claims 5 to 8,

wherein the blocking agent includes a compound represented by General Formula (I),

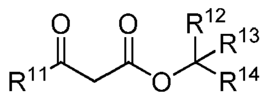

(I)

wherein in General Formula (I), $R^{11}$ is a hydroxy group; an alkyl group which may include one or more substituents selected from the group consisting of a hydroxy group and an amino group; an amino group which may include one or more substituents selected from the group consisting of a hydroxy group and an alkyl group; an aryl group which may include one or more substituents selected from the group consisting of a hydroxy group and an amino group; or an alkoxy group which may include one or more substituents selected from the group consisting of a hydroxy group and an amino group; and in the amino group, two of the substituents may be linked to each other to form a ring;

$R^{12}$, $R^{13}$, and $R^{14}$ are each independently a hydrogen atom; an alkyl group which may include one or more substituents selected from the group consisting of a hydroxy group and an amino group; or an aryl group which may include one or more substituents selected from the group consisting of a hydroxy group and an amino group; and in the amino group, two of the substituents may be linked to each other to form a ring; except that two or more of $R^{12}$, $R^{13}$, and $R^{14}$ are hydrogen atoms.

**10.** A coating material composition, comprising:

the polyisocyanate composition according to any one of Claims 1 to 4, or the blocked polyisocyanate composition according to any one of Claims 5 to 9; and

a polyhydric hydroxy compound.

11. A coating film formed by curing the coating material composition according to Claim 10.

**Patentansprüche**

1. Polyisocyanat-Zusammensetzung, enthaltend:

   ein Polyisocyanat, das aus einem aliphatischen Diisocyanat und einem alicyclischen Diisocyanat erhalten wurde; und
   ein Polyol mit einem zahlenmittleren Molekulargewicht von 400 bis 5.000 und einer durchschnittlichen Anzahl von Hydroxygruppen von 3 bis 8,
   wobei die folgenden Bedingungen (1) bis (3) erfüllt sind:

   (1) der Gehalt einer von dem Polyol abgeleiteten Struktureinheit beträgt von 22 Massen-% bis 80 Massen-%, bezogen auf die Gesamtmasse der Polyisocyanat-zusammensetzung;
   (2) die durchschnittliche Anzahl der funktionellen Isocyanatgruppen beträgt von 3,5 bis 20; und
   (3) ein gewichtsmittleres Molekulargewicht/zahlenmittleres Molekulargewicht ist von 3,5 bis 15,

   wobei die Polyisocyanat-Zusammensetzung weiterhin 12 % oder mehr eines Isocyanurat-Trimers, bezogen auf den Feststoffgehalt der Polyisocyanat-Zusammensetzung, enthält, und
   das Massenverhältnis einer von dem aliphatischen Diisocyanat abgeleiteten Struktureinheit zu einer von dem alicyclischen Diisocyanat abgeleiteten Struktureinheit 50/50 bis 95/5 beträgt.

2. Polyisocyanat-Zusammensetzung nach Anspruch 1,
   wobei das zahlenmittlere Molekulargewicht des Polyols mehr als 500 und 5.000 oder weniger beträgt.

3. Polyisocyanat-Zusammensetzung nach Anspruch 1 oder 2,
   wobei ein Teil oder die Gesamtheit der Polyisocyanate eine Struktureinheit aufweist, die von einer hydrophilen Verbindung abgeleitet ist.

4. Polyisocyanat-Zusammensetzung nach Anspruch 3,
   wobei die von der hydrophilen Verbindung abgeleitete Struktureinheit mindestens eine hydrophile Gruppe enthält, die aus der Gruppe ausgewählt ist, die aus einer nichtionischen hydrophilen Gruppe und einer anionischen hydrophilen Gruppe besteht.

5. Blockierte Polyisocyanat-Zusammensetzung, welche durch Blockieren eines Teils oder aller Isocyanatgruppen der Polyisocyanat-Zusammensetzung nach einem der Ansprüche 1 bis 4 mit einem Blockiermittel gebildet wurde.

6. Blockierte Polyisocyanat-Zusammensetzung nach Anspruch 5,
   wobei das Blockiermittel mindestens eine Verbindung ist, die aus der Gruppe ausgewählt ist, die aus einer Verbindung auf Oximbasis, einer Verbindung auf Pyrazolbasis, einer Verbindung auf Imidazolbasis, einer Verbindung auf Triazolbasis und einer besteht.

7. Blockierte Polyisocyanat-Zusammensetzung nach Anspruch 5 oder 6,
   wobei das Blockiermittel mindestens eine Verbindung ist, die aus der Gruppe ausgewählt ist, die aus der Verbindung auf Imidazolbasis, der Verbindung auf Triazolbasis und der Verbindung auf Basis von aktivem Methylen besteht.

8. Blockierte Polyisocyanat-Zusammensetzung nach einem der Ansprüche 5 bis 7, wobei das Blockiermittel die Verbindung auf Basis von aktivem Methylen ist.

9. Blockierte Polyisocyanat-Zusammensetzung nach einem der Ansprüche 5 bis 8,

   wobei das Blockiermittel eine Verbindung der allgemeinen Formel (I) beinhaltet,

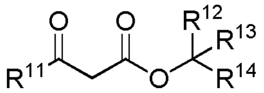
(I)

wobei in der allgemeinen Formel (I) $R^{11}$ eine Hydroxygruppe; eine Alkylgruppe, die einen oder mehrere Substituenten, ausgewählt aus der Gruppe bestehend aus einer Hydroxygruppe und einer Aminogruppe, enthalten kann; eine Aminogruppe, die einen oder mehrere Substituenten, ausgewählt aus der Gruppe bestehend aus einer Hydroxygruppe und einer Alkylgruppe, enthalten kann; eine Arylgruppe, die einen oder mehrere Substituenten, ausgewählt aus der Gruppe bestehend aus einer Hydroxygruppe und einer Aminogruppe, enthalten kann; oder eine Alkoxygruppe, die einen oder mehrere Substituenten ausgewählt aus der Gruppe bestehend aus einer Hydroxygruppe und einer Aminogruppe enthalten kann; wobei in der Aminogruppe zwei der Substituenten miteinander unter Ringbildung verbunden sein können; ist;
$R^{12}$ , $R^{13}$ und $R^{14}$ jeweils unabhängig voneinander ein Wasserstoffatom; eine Alkylgruppe, die einen oder mehrere Substituenten, ausgewählt aus der Gruppe bestehend aus einer Hydroxygruppe und einer Aminogruppe, enthalten kann; oder eine Arylgruppe, die einen oder mehrere Substituenten, ausgewählt aus der Gruppe bestehend aus einer Hydroxygruppe und einer Aminogruppe, enthalten kann; wobei in der Aminogruppe zwei der Substituenten miteinander unter Ringbildung verbunden ein können; sind; mit der Ausnahme, dass zwei oder mehr der $R^{12}$, $R^{13}$ und $R^{14}$ Wasserstoffatome sind.

**10.** Beschichtungsmaterialzusammensetzung, umfassend:

die Polyisocyanat-Zusammensetzung nach einem der Ansprüche 1 bis 4 oder die blockierte Polyisocyanat-Zusammensetzung nach einem der Ansprüche 5 bis 9; und
eine mehrwertige Hydroxyverbindung.

**11.** Beschichtungsfilm, gebildet durch Härten der Beschichtungsmaterialzusammensetzung nach Anspruch 10.

## Revendications

**1.** Composition de polyisocyanate comprenant un polyisocyanate obtenue à partir de :

un diisocyanate aliphatique et un diisocyanate alicyclique ; et
un polyol ayant un poids moléculaire moyen en nombre de 400 à 5 000 et un nombre moyen de groupes hydroxy de 3 à 8,
dans laquelle les conditions (1) à (3) suivantes sont satisfaites :

(1) une teneur d'un motif structural dérivé du polyol est de 22 % en masse à 80 % en masse par rapport à une masse totale de la composition de polyisocyanate ;
(2) un nombre moyen de groupes fonctionnels isocyanate est de 3,5 à 20 ; et
(3) un poids moléculaire moyen en poids/un poids moléculaire moyen en nombre est de 3,5 à 15,

dans laquelle la composition de polyisocyanate comprend en outre 12 % ou plus d'un trimère d'isocyanurate par rapport à la teneur en solides de la composition de polyisocyanate, et
un rapport massique d'un motif structural dérivé du diisocyanate aliphatique à un motif structural dérivé du diisocyanate alicyclique est de 50/50 à 95/5.

**2.** Composition de polyisocyanate selon la revendication 1, dans laquelle un poids moléculaire moyen en nombre du polyol est supérieur à 500 et inférieur ou égal à 5 000.

**3.** Composition de polyisocyanate selon la revendication 1 ou 2,
dans laquelle une partie ou la totalité des polyisocyanates a un motif structural dérivé d'un composé hydrophile.

**4.** Composition de polyisocyanate selon la revendication 3, dans laquelle le motif structural dérivé du composé hydrophile comporte au moins un groupe hydrophile choisi dans le groupe constitué d'un groupe hydrophile non ionique et d'un groupe hydrophile anionique.

**5.** Composition de polyisocyanate bloquée formée par blocage d'une partie ou de la totalité des groupes isocyanate de la composition de polyisocyanate selon l'une quelconque des revendications 1 à 4 avec un agent de blocage.

**6.** Composition de polyisocyanate bloquée selon la revendication 5, dans laquelle l'agent de blocage est au moins un composé choisi dans le groupe constitué d'un composé à base d'oxime, d'un composé à base de pyrazole, d'un composé à base d'imidazole, d'un composé à base de triazole et d'un composé à base de méthylène actif.

**7.** Composition de polyisocyanate bloquée selon la revendication 5 ou 6, dans laquelle l'agent de blocage est au moins un composé choisi dans le groupe constitué du composé à base d'imidazole, du composé à base de triazole et du composé à base de méthylène actif.

**8.** Composition de polyisocyanate bloquée selon l'une quelconque des revendications 5 à 7, dans laquelle l'agent de blocage est le composé à base de méthylène actif.

**9.** Composition de polyisocyanate bloquée selon l'une quelconque des revendications 5 à 8,

dans laquelle l'agent de blocage comporte un composé représenté par la Formule générale (I),

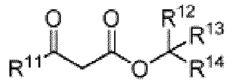 (I)

dans laquelle dans la Formule générale (I), $R^{11}$ est un groupe hydroxy ; un groupe alkyle qui peut comporter un ou plusieurs substituants choisis dans le groupe constitué d'un groupe hydroxy et d'un groupe amino ; un groupe amino qui peut comporter un ou plusieurs substituants choisis dans le groupe constitué d'un groupe hydroxy et d'un groupe alkyle ; un groupe aryle qui peut comporter un ou plusieurs substituants choisis dans le groupe constitué d'un groupe hydroxy et d'un groupe amino ; ou un groupe alcoxy qui peut comporter un ou plusieurs substituants choisis dans le groupe constitué d'un groupe hydroxy et d'un groupe amino ; et dans le groupe amino, deux des substituants peuvent être liés l'un à l'autre pour former un noyau ;
$R^{12}$, $R^{13}$ et $R^{14}$ sont chacun indépendamment un atome d'hydrogène ; un groupe alkyle qui peut comporter un ou plusieurs substituants choisis dans le groupe constitué d'un groupe hydroxy et d'un groupe amino ; ou un groupe aryle qui peut comporter un ou plusieurs substituants choisis dans le groupe constitué d'un groupe hydroxy et d'un groupe amino ; et dans le groupe amino, deux des substituants peuvent être liés l'un à l'autre pour former un noyau ; à l'exception que deux ou plus de $R^{12}$, $R^{13}$ et $R^{14}$ sont des atomes d'hydrogène.

**10.** Composition de matériau de revêtement, comprenant :

la composition de polyisocyanate selon l'une quelconque des revendications 1 à 4, ou la composition de polyisocyanate bloquée selon l'une quelconque des revendications 5 à 9 ; et
un composé hydroxy polyhydrique.

**11.** Film de revêtement formé par durcissement de la composition de matériau de revêtement selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015203104 A
- US 2012238697 A1
- US 2010256324 A1
- WO 2018163959 A1
- JP S5734107 A
- JP S61275311 A
- JP H1261409 A
- JP H3006273 A